# EUROPEAN PATENT APPLICATION

(11) **EP 4 559 715 A1**
(43) Date of publication of application: **28.05.2025**
(21) Application number: 22953241.1
(22) Date of filing: 29.07.2022
(51) Int. Cl.: B60K 35/00

(54) **AR SIGNAGE DISPLAY DEVICE OF VEHICLE AND OPERATION METHOD THEREOF**

(71) Applicant: LG Electronics Inc., Yeongdeungpo-gu Seoul 07336 (KR)
(72) Inventor: LEE, Jinsang, Seoul 06772 (KR); KIM, Sujin, Seoul 06772 (KR); SON, Jinho, Seoul 06772 (KR)
(74) Representative: Vossius & Partner Patentanwälte Rechtsanwälte mbB
(86) International application number: PCT/KR2022/011242
(87) International publication number: WO 2024/025016

(57) **Abstract**

An AR signage display device linked with a vehicle and an operation method thereof are disclosed. An AR signage display device linked with a vehicle according to the present invention may determine whether a condition to limit display of AR digital signage has occurred, on the basis of traveling information of a vehicle and map information, which are received while the vehicle is traveling, and if the condition has occurred, correct signage data matching a position where the condition to limit display has occurred and perform AR rendering. Accordingly, when a vehicle turns, frequently changes traveling, or enters a particular zone such as a roundabout, the device may not display partial AR digital signage or limit display thereof so that a driver can focus on driving on the basis of such traveling information.

## Description

### Technical Field

The present disclosure relates to an AR signage display apparatus operating in conjunction with a vehicle and a method of operating the AR signage display apparatus. More specifically, the present disclosure relates to an AR signage display apparatus capable of displaying AR digital signage in a determined display region within a traveling image and display-restricting the AR digital signage based on situational factors, and a method of operating the AR signage display apparatus.

### Background Art

To enhance the safety and convenience of vehicle users, various sensors and apparatuses are provided in the vehicle to enable the vehicle's diverse functions. These vehicle functions may be categorized into convenience functions for enhancing the driver convenience and safety functions for enhancing the safety of drivers and/or pedestrians.

Vehicle convenience functions refer to infotainment (information + entertainment) features and are designed to enhance driver convenience, such as supporting partial autonomous driving or improving visibility during night driving and in blind spots. Examples of these vehicle convenience functions include active cruise control (ACC), a smart parking assist system (SPAS), night vision (NV), head-up display (HUD), an around view monitor (AVM), an adaptive headlight system (AHS), and so forth.

Vehicle safety functions are technologies for ensuring the safety of drivers and/or pedestrians, and include a lane departure warning system (LDWS), a lane keeping assist system (LKAS), an autonomous emergency braking (AEB) function, and so forth.

In recent years, research has been actively conducted on developments of Augmented Reality (AR) technologies that enable the display of graphic objects on a vehicle windshield and head-up display or their integration into the real world by overlaying them onto images captured by cameras. Particularly, technologies have been widely developed for guiding a driver toward a path and displaying to the driver various additional information and advertisements related to POIs along the path by utilizing AR technologies.

Various guidance or advertisements using AR technologies are expressed in the form of AR objects floating on the real traveling image, thereby causing a slight sense of disconnection from reality. However, this approach cannot allow for the simultaneous presentation of multiple pieces of information. In addition, when various guidance and advertisements using AR technologies are displayed in this manner on a traveling image, factors such as the forms of buildings within the driver's viewing field, the vehicle's traveling situation, the driver's personal preferences, and surrounding traffic and structural environments can be flexibly reflected.

Accordingly, even in a case where the form of AR objects with high realism, for example, information about content in the form of AR signage, appears in the driver's viewing field, it may be necessary to restrict the display to ensure that the driver keeps their eyes forward attentively, depending on various situations (for example, a road situation, risk detection, or the like) while the vehicle travels.

### Disclosure of Invention

### Technical Problem

Objects of the present disclosure are to address the above-mentioned problems and other problems.

One object of one or several embodiments of the present disclosure is to provide an AR signage display apparatus of a vehicle that is capable of providing various useful information in the form of AR digital signage with high realism while the vehicle travels and display-changing or display-restricting the display in such a manner that a driver keeps their eyes forward depending on situations detected while the vehicle travels, and a method of operating the AR signage display apparatus.

Another object of one or several embodiments of the present disclosure is to provide an AR signage display apparatus of a vehicle that is capable of displaying or display-restricting AR digital signage by varying an appropriate method of restricting the display, based on each situation detected while the vehicle travels, and a method of operating the AR signage display apparatus.

Still another object of one or several embodiments of the present disclosure is to provide an AR signage display apparatus of a vehicle that is capable of accurately recognizing a section or situation requiring a driver to keep their eyes forward by determining the restriction of, and the technique of the restriction of, the display of the AR digital signage within a traveling image of the vehicle on the basis of the collection of data and information by more various sources, and a method of operating the AR signage display apparatus.

### Solution to Problem

To this end, an AR signage display apparatus operating in conjunction with a vehicle according to the present disclosure may determine that a condition for restricting the display of AR digital signage occurs, on the basis of traveling formation of the vehicle and map information, which are received while the vehicle travels. In this case, the AR signage display apparatus may perform AR rendering by correcting signage data matched with a location at which the condition for restricting the display occurs.

Accordingly, at least one portion of the AR signage is not displayed within a traveling image. Alternatively, the AR signage is displayed in different forms or sizes, or with adjusted transparency. This approach enables a driver to keep their eyes forward more attentively, thereby ensuring traveling safety.

According to an aspect of the present disclosure, there is provided an AR signage display apparatus operating in conjunction with a vehicle, the apparatus including: a communication module that communicates with the vehicle and a cloud server providing an AR signage platform service; a display on which a traveling image of the vehicle, acquired through a vision sensor, is displayed; and a processor that receives sensing data of the vehicle through the communication module, makes a request to the cloud server for AR signage data for displaying, as digital signage, content for neighboring a POI determined on the basis of a location of the vehicle and the sensing data of the vehicle, and renders the digital signage, generated on the basis of the AR signage data corresponding to the request, onto a display region within the traveling image. In the AR signage display apparatus, the processor determines the occurrence of a condition for restricting the display of the digital signage, on the basis of traveling information of the vehicle and map information, which are received while the vehicle travels, corrects the AR signage data matched with a location at which the condition for restricting the display occurs, and performs a rendering update of the digital signage on the basis of the corrected AR signage data.

According to an embodiment, in the AR signage display apparatus, the processor may receive turning-related traveling information of the vehicle, may recognize, on the basis of the received turning-related traveling information, a display region located in a turning direction as the location at which the condition for restricting the display occurs, and may correct the AR signage data matched with the display region.

According to an embodiment, in the AR signage display apparatus, the processor may determine, on the basis of the received turning-related traveling information, that an amount of change in a heading angle of the vehicle exceeds a preset threshold value, and, on the basis of the determination, may correct the AR signage data in such a manner as to display-restrict digital signage in the display region located in the turning direction.

According to an embodiment, in the AR signage display apparatus, the processor may maintain the display of digital signage in a display region located in the opposite direction to the turning direction while the amount of change in the heading angle of the vehicle exceeds the preset threshold value, and, in response to the amount of change in the heading angle of the vehicle decreasing to below the preset threshold value, may correct the AR signage data in such a manner as to cancel the restriction of the display of the digital signage in the display region located in the turning direction.

According to an embodiment, in the AR signage display apparatus, the processor may recognize, on the basis of the current location of the vehicle and the map information, that the vehicle enters a specific section, and may correct the AR signage data in such a manner as to restrict the display of digital signage pieces in all neighboring display regions while the vehicle is present in the specific section.

According to an embodiment, in the AR signage display apparatus, the processor may recognize, on the basis of the current location of the vehicle and the map information, that the vehicle enters a specific section, and may correct the AR signage data in such a manner as to restrict the display of digital signage in a display region located in a traveling direction of the vehicle when the vehicle enters the specific section.

According to an embodiment, in the AR signage display apparatus, the processor may apply a transparency correction value to the AR signage data matched with the location at which the condition for restricting the display occurs, in a manner that varies depending on whether or not the vehicle travels while being path-guided.

According to an embodiment, in the AR signage display apparatus, the processor may receive navigation information of the vehicle through the communication module and, in response to the vehicle entering a traveling direction change section or a destination section, may determine, on the basis of the received navigation information, that the condition for restricting the display occurs.

According to an embodiment, in the AR signage display apparatus, in response to the vehicle entering the destination section, the processor may correct the AR signage data on the basis of the received navigation information in such a manner as to restrict the display of digital signage containing content not related to a destination, among digital signage pieces in display regions within the destination section.

According to an embodiment, in the AR signage display apparatus, in response to the vehicle entering the traveling direction change section, based on the recognition that a traveling direction changes a set number of times or more within the traveling direction change section, the processor may correct the AR signage data on the basis of the received navigation information in such a manner as to restrict the display of digital signage in a display region within the traveling direction change section.

According to an embodiment, in the AR signage display apparatus, the correction of the AR signage data may be correction of one of the following: the location, transparency, size, or shape of the corresponding digital signage.

According to an embodiment, in the AR signage display apparatus, the processor may recognize a junction section for a lane along which the vehicle travels, on the basis of the current location of the vehicle and the map information, and, based on another vehicle approaching the junction section, the processor may correct the AR signage data on the basis of the sensing data of the vehicle in such a manner as to change one of the following: the location, transparency, size, or shape of digital signage in a display region at a relevant location.

According to an embodiment, in the AR signage display apparatus, the processor may determine at least one of the following techniques: correcting AR signage data for the location at which the condition for restricting the display occurs, or correcting AR signage data matched with the location, in a manner that varies depending on a change in an image distortion rate of the display region recognized through the vision sensor or a change in an area ratio between the front and lateral surfaces of the display region.

According to an embodiment, in the AR signage display apparatus, the traveling image including the display region in which the rendering-updated digital signage overlaps is displayed on the display, and the display of the AR digital signage is restored based on the termination of the condition for restricting the display, thereby the AR digital signage being displayed on the display.

### Advantageous Effects of Invention

The effects of an AR signage display apparatus according to the present disclosure and a method of operating the AR signage display apparatus are described below.

According to one or several embodiments of the present disclosure, in a case where a vehicle travels for turning, changes its course frequently, or enters a specific area, such as a roundabout, one or several AR digital signage pieces are disabled from being displayed or can be display-restricted in order to ensure that a driver drives attentively on the basis of traveling information about the specific are.

In addition, on the basis of traveling environmental information, such as information about a traffic congestion section or information about a decrease in the vehicle's visible distance, the display of the AR digital signage can be restricted in such a manner that the driver's view ahead of the vehicle is not hidden from view and that a region related to the travel environmental information is not hidden from view.

In addition, an appropriate method of restricting the display, which varies depending on the attributes of traveling information of the vehicle and/or environmental information, is applied on a per-situation basis. Consequently, the AR digital signage with high realism can be provided, thereby enhancing traveling safety.

### Brief Description of Drawings

FIG. 1 is a view illustrating a vehicle related to an embodiment of the present disclosure.
FIG. 2 is a view illustrating the vehicle related to the embodiment of the present disclosure, when viewed from various angles.
FIGS. 3 and 4 are views illustrating the interior of the vehicle related to the embodiment of the present disclosure.
FIGS. 5 and 6 are views that are referenced to describe various objects related to the traveling of the vehicle related to the embodiment of the present disclosure.
FIG. 7 is a block diagram that is reference to describe the vehicle related to the embodiment of the present disclosure.
FIG. 8 is a block diagram illustrating the structure of an overall system related to restricting the display of an AR digital signage according to an embodiment of the present disclosure.
FIG. 9 is a view that is referenced to describe the configuration of an AR signage display apparatus of the vehicle and input and output data, according to an embodiment of the present disclosure.
FIG. 10 is a view that is referenced to describe the display that is performed by employing the technique of restricting the display of the AR digital signage that varies with a change in the area of a display region or with a change in an image distortion rate, according to an embodiment of the present disclosure.
FIGS. 11, 12, 13, 14, 15, and 16A to 16D are views illustrating various embodiments according to the present disclosure, respectively, in which the AR digital signage is changed or is display-restricted on the basis of traveling state information of the vehicle.
FIGS, 17A to 17D, 18, 19A to 19D, 20, 21, 22, 23, and 24 are views illustrating various embodiments according to the present disclosure, respectively, in which the AR digital signage is changed and displayed for traveling safety on the basis of traveling environmental information of the vehicle.

### Mode for the Invention

Embodiments disclosed in the present specification will be described in detail below with reference to the accompanying drawings. Regardless of figure numbers, the same or similar constituent elements are assigned the same reference number and descriptions thereof are not repeated. The terms "module" and "unit" are hereinafter interchangeably or individually used to refer to a constituent element only for convenience in description in the present specification. Therefore, they are not intended by themselves to convey different meanings or to depict different functions. In addition, when describing the embodiments disclosed in the present specification, detailed descriptions of related well-known technologies will be omitted if it is determined that they would obscure the nature and gist of the present disclosure. In addition, the accompanying drawings are provided solely to facilitate understanding of the embodiments disclosed in the present specification. It should be understood that the technical idea disclosed in the present specification is not limited by the accompanying drawings. Furthermore, it should be understood that any alteration or equivalent of, or any substitute for, a constituent element according to the embodiment of the present disclosure, which falls within the scope of the technical idea of the present disclosure, is included within the scope of the present disclosure.

The ordinal numbers first, second, and so forth may be used to describe various constituent elements, but they do not limit these constituent elements. These ordinal numbers are only used to distinguish one constituent element from another.

It should be understood that a constituent element, when referred to as 'connected to' or 'having access to' a different constituent element, may be directly connected to or have direct access to the different constituent element, or may be connected to or have access to the different constituent element, with a third constituent element in between. Conversely, it should be understood that a constituent element, when referred to as "directly connected to" or "having direct access to" a different constituent element, may be connected to or have access to the different constituent element without a third constituent element in between.

A noun in singular form has the same meaning as when used in its plural form, unless it has a different meaning in context.

The term 'include,' 'have,' or the like in the present application is intended to indicate that a feature, a number, a step, an operation, a constituent element, a component, or a combination thereof, each of which is described in the specification, is present, and thus should be understood not to preclude the possibility that one or more other features, numbers, steps, operations, constituent elements, components, or combinations thereof may also be present or added.

Examples of a vehicle described in the present specification may conceptually include automobiles and motorcycles. The vehicle will be described below with a focus placed on the automobile.

Examples of the vehicle described in the present specification may conceptually include all vehicles, such as internal combustion engine vehicles having an engine as a motive power source, hybrid vehicles having an engine and an electric motor as motive power sources, and electric vehicles having an electric motor as a motive power source.

In the following description, the left side of the vehicle refers to the left side in the traveling direction of the vehicle, and the right side of the vehicle refers to the right side in the traveling direction.

The term 'system' disclosed in the present specification may include at least one of the following: a server apparatus or a cloud apparatus, but is not limited thereto. For example, the system may be configured with one or more server apparatuses. As another example, the system may be configured with one or more cloud apparatuses. As still another example, to operate, the system may be configured to operate with both a server apparatus and a cloud apparatus.

In the present specification, a "user terminal," or a "user client" may inclusively refer to a computing apparatus and/or a system, such as another user terminal, or a user operating the computing apparatus and/or the system. The computing apparatus and/or the system communicates with a vehicle (an electronic component, an apparatus/system, or the like, each of which is provided within a vehicle) and an AR digital signage platform apparatus/system.

A "digital signage platform" disclosed in the present specification may refer to an embedded or apparatus-based platform or a cloud-based platform that is capable of providing Platform as a Service (PaaS) and/or Machine Learning as a Service (MLaaS). This digital signage platform is related to a method/operation of providing AR digital signage.

"Map information" disclosed in the present disclosure may inclusively refer to an image captured through a vision sensor, such as a camera, two-dimensional map information, three-dimensional map information, a digital twin three-dimensional, or map information in real/virtual space.

"Point of Interest (POI) information" disclosed in the present disclosure is a Point of Interest selected on the basis of the map information. The POI information may include pre-registered POI information (a POI stored on a map in a cloud server), user-defined POI information (for example, a house, a school, a company, or the like), traveling-related POI information (for example, a destination, a stopover, a gas station, a rest area, a parking lot, or the like), and high search rate POI information (for example, a recently frequently clicked or visited POI, a hot place, or the like). This POI information may be updated in real time based on the current location of a vehicle.

A "traveling image" disclosed in the specification is acquired through a vehicle or a vision sensor in the vicinity of the vehicle. For example, the traveling image may include an image acquired or projected through a vision sensor for imaging (a camera, a laser sensor, or the like) while the vehicle travels, and an image of the real world/virtual space, projected onto the windshield of the vehicle. That is, the traveling image may inclusively refer to an image output through a display, an image projected through a laser sensor or the like, or an image of the real world, seen through the windshield of the vehicle.

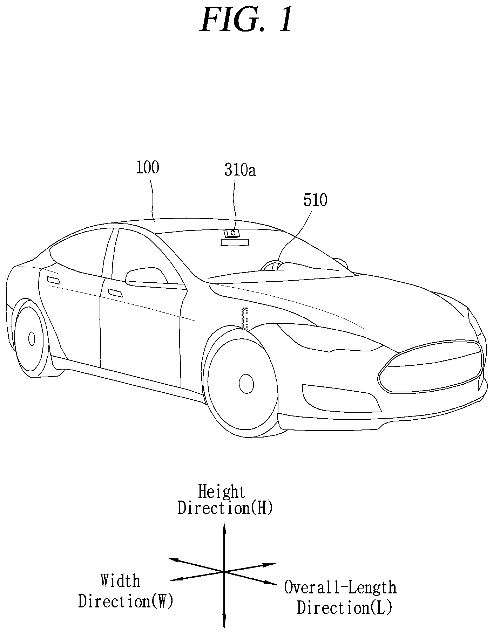

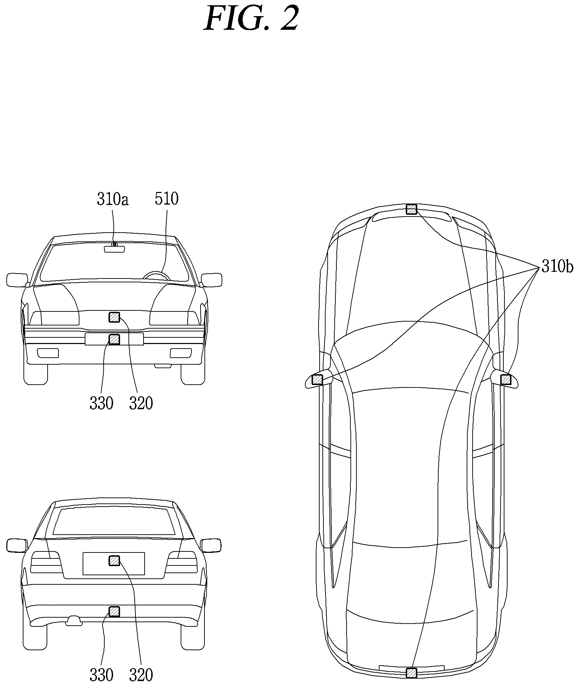

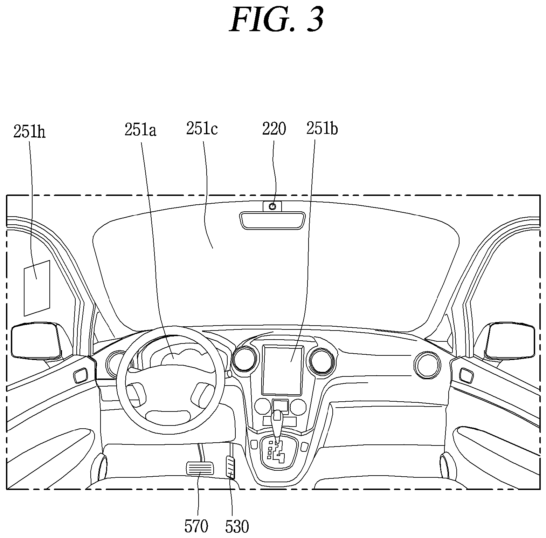

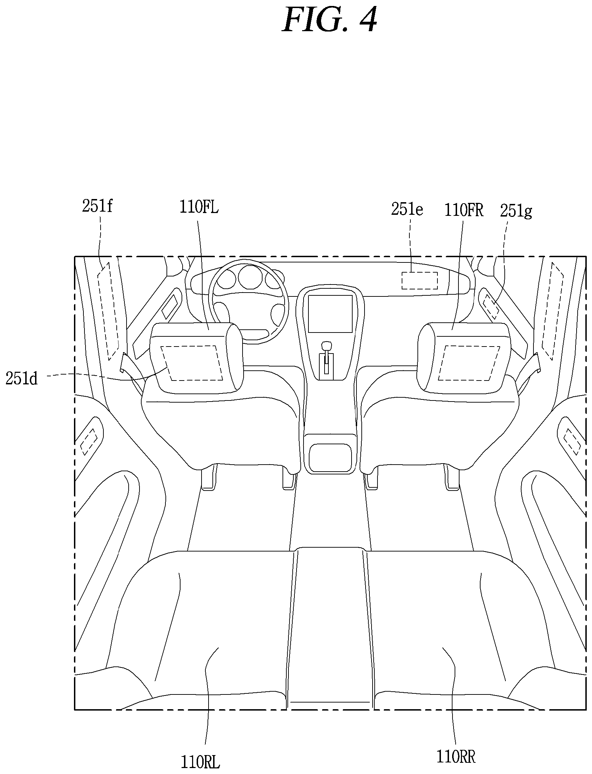

FIGS. 1 and 2 are views illustrating the exterior appearance of a vehicle related to an embodiment of the present disclosure. FIGS. 3 and 4 are views illustrating the interior of the vehicle related to the embodiment of the present disclosure.

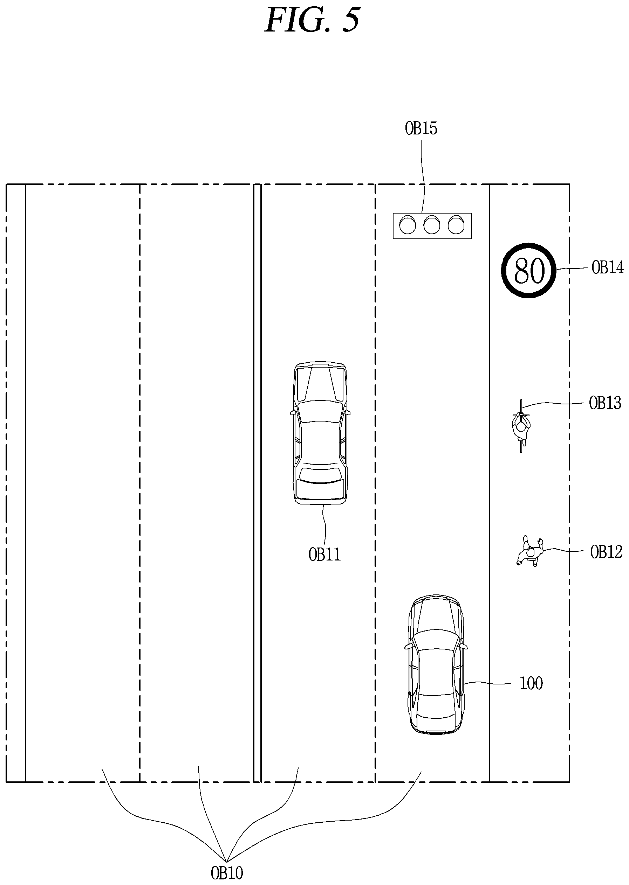

FIGS. 5 to 6 are views illustrating various objects, respectively, related to the traveling of the vehicle related to the embodiment of the present disclosure.

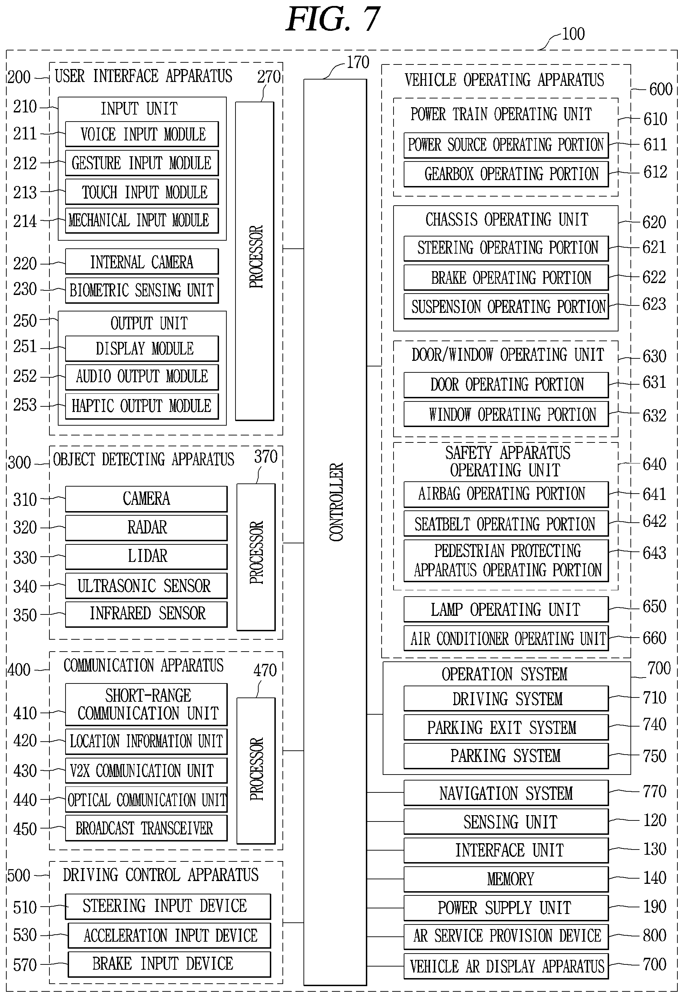

FIG. 7 is a block diagram that is referenced to describe the vehicle related to the embodiment of the present disclosure.

With reference to FIGS. 1 to 7, a vehicle 100 may include wheels that rotate by a motive power source and a steering input device 510 for adjusting the traveling direction of the vehicle 100.

The vehicle 100 may be an autonomous vehicle. The vehicle 100 may switch to an autonomous traveling mode or a manual mode on the basis of a user input. For example, the vehicle 100 may switch from the manual mode to the autonomous traveling mode or from the autonomous traveling mode to the manual mode on the basis of a user input received through a user interface device 200 (which may be hereinafter referred to as a 'user terminal')

The vehicle 100 may switch to the autonomous traveling mode or the manual mode on the basis of traveling situation information. The traveling situation information may be generated on the basis of object information provided by an object detection apparatus 300. For example, the vehicle 100 may switch from the manual mode to the autonomous traveling mode or from the autonomous traveling mode to the manual mode on the basis of the traveling situation information generated by the object detection apparatus 300. For example, the vehicle 100 may switch from the manual mode to the autonomous traveling mode or from the autonomous traveling mode to the manual mode on the basis of the traveling situation information received through a communication apparatus 400.

The vehicle 100 may switch from the manual mode into the autonomous traveling mode or from the autonomous traveling mode to the manual mode on the basis of information, data, signals, all of which are provided by an external device.

In a case where the vehicle 100 operates to drive in the autonomous traveling mode, the autonomous vehicle 100 may drive on the basis of a drive operation system 700. For example, the autonomous vehicle 100 may operate to drive on the basis of information, data, and signals, all of which are generated by a traveling system 710, a parking-lot departure system 740, and a parking system 750.

When the vehicle 100 operates to drive in the manual mode, the autonomous vehicle 100 may receive a user input for driving, through a driving maneuver apparatus 500. The vehicle 100 may operate to drive on the basis of the user input received through the driving maneuver apparatus 500.

The overall length refers to the length from the front end to the rear end of the vehicle 100, the width refers to the width of the vehicle 100, and the height refers to the length from the bottom of the wheel to the roof. In the following description, an overall-length direction L may refer to a direction which serves as a reference for measuring the overall length of the vehicle 100, a width direction W may refer to a direction that serves as a reference for measuring the width of the vehicle 100, and a height direction H may refer to a direction that serves as a reference for measuring the height of the vehicle 100.

As illustrated in FIG. 7, the vehicle 100 may include the user interface device (hereinafter referred to as the 'user terminal') 200, the object detection apparatus 300, the communication apparatus 400, the driving maneuver apparatus 500, a vehicle drive apparatus 600, the drive operation system 700, a navigation system 770, a sensing unit 120, a vehicular interface unit 130, a memory 140, a control unit 170 and a power supply unit 190.

According to an embodiment, the vehicle 100 may include one or more constituent elements in addition to constituent elements described in the present specification or may omit one or more of the described constituent elements.

The user interface device 200 is a device for communication between the vehicle 100 and the user. The user interface device 200 may receive a user input and may provide information, generated by the vehicle 100, to the user. The vehicle 100 may realize a user interface (UI) or user experience (UX) through the user interface device (which may be hereinafter referred to as the 'user terminal') 200.

The user interface device 200 may include an input unit 210, an internal camera 220, a bio-sensing unit 230, an output unit 250, and a processor 270. According to an embodiment, the user interface device 200 may include one or more constituent elements in addition to constituent elements described in the present specification or may omit one or more of the described constituent elements.

The input unit 210 is configured to receive information, as input, from the user. Data collected through the input unit 120 may be analyzed by the processor 270 and processed into a control command of the user.

The input unit 210 may be arranged within the vehicle. For example, the input unit 210 may be arranged on one region of the steering wheel, one region of the instrument panel, one region of the seat, one region of each pillar, one region of the door, one region of the center console, one region of the headlining, one region of the sun visor, one region of the windshield, one region of the window, or one region of a similar location.

The input unit 210 may include a voice input part 211, a gesture input part 212, a touch input part 213, and a mechanical input part 214.

The voice input part 211 may convert a user's voice input into an electric signal. The electric signal, resulting from the conversion, may be provided to the processor 270 or the control unit 170. The voice input part 211 may include at least one microphone.

The gesture input part 212 may convert a user's gesture input into an electric signal. The electric signal, resulting from the conversion, may be provided to the processor 270 or the control unit 170.

The gesture input part 212 may include at least one of the following: an infrared sensor or an image sensor, each of which is for detecting the user's gesture input. According to an embodiment, the gesture input part 212 may detect a three-dimensional (3D) gesture input from the user. To this end, the gesture input part 212 may include a light output unit that outputs a plurality of infrared beams, or a plurality of image sensors.

The gesture input part 212 may detect the user's 3D gesture input through a Time-of-Flight (TOF) technique, a structured light technique, or a disparity technique.

The touch input part 213 may convert the user's touch input into an electric signal. The electric signal, resulting from the conversion, may be provided to the processor 270 or the control unit 170.

The touch input part 213 may include a touch sensor for detecting the user's touch input. According to an embodiment, the touch input unit 213 may be integrally formed with a display part 251, thereby realizing a touch screen. This touch screen may provide both an input interface and an output interface between the vehicle 100 and the user.

The mechanical input part 214 may include at least one of the following: a button, a dome switch, a jog wheel, or a jog switch. An electric signal generated by the mechanical input part 214 may be provided to the processor 270 or the control unit 170. The mechanical input part 214 may be arranged on the steering wheel, the center fascia, the center console, the cockpit module, the door, and the like.

The internal camera 220 may acquire an image of the interior of the vehicle 100. The processor 270 may detect a user's state on the basis of the image of the interior of the vehicle 100. The processor 270 may acquire the user's gaze information from the image of the interior of the vehicle 100. The processor 270 may detect the user's gesture from the image of the interior of the vehicle 100.

The bio-sensing unit 230 may acquire the user's bio-information. The bio-sensing unit 230 may include a sensor for acquiring the user's bio-information and may acquire the user's fingerprint information, heart rate information, and the like using the sensor. The bi-information may be used for user authentication.

The output unit 250 may generate an output related to sight, hearing, or touch. The output unit 250 may include at least one of the following: the display part 251, an audio output part 252, or a haptic output part 253.

A graphic object corresponding to various types of information may be displayed on the display part 351. The display part 251 may include at least one of the following: a liquid crystal display (LCD), a thin film transistor-LCD (TFT LCD), an organic light-emitting diode (OLED), a flexible display, a three-dimensional (3D) display, an e-ink display, or the like.

The display part 251 may be inter-layered with, or integrally formed with, the touch input part 213, thereby realizing a touch screen.

The display part 251 may be realized as a head-up display (HUD). In a case where the display part 251 may be idealized as the HUD, the display part 251 may be equipped with a projection module and thus may output information through an image that is projected onto the window shield or the window.

Examples of the display part 251 may include a transparent display. The transparent display may be attached to the windshield or the window. The transparent display may have a predetermined degree of transparency, and a predetermined screen may be displayed on the transparent display. The transparent display may include at least one of the following: a thin film electroluminescent (TFEL), a transparent organic light-emitting diode (OLED), a transparent a liquid crystal display (LCD), a transmissive transparent display, a transparent light-emitting diode (LED) display, or the like. The transparent display may have adjustable transparency.

The user interface device 200 may include a plurality of display parts, for example, display parts 251a to 251g.

The display part 251 may be arranged on one region of the steering wheel, one region 521a, 251b, or 251e of the instrument panel, one region 251d of the seat, one region 251f of each pillar, one region 251g of the door, one region of the center console, one region of the headlining, or one region of the sun visor, or may be realized on one region 251c of the windshield, or one region of the window.

The audio output part 252 converts an electric signal provided from the processor 270 or the control unit 170 into an audio signal and outputs the resulting audio signal. To this end, the audio output part 252 may include at least one speaker.

The haptic output part 253 generates a tactile output. For example, the haptic output part 253 may operate to vibrate the steering wheel, the safety belt, and the seats 110FL, 110FR, 110RL, and 110RR, thereby enabling the user to recognize the vibration output.

The processor (hereinafter referred to as a 'control unit') 270 may control the overall operation of each unit of the user interface device 200. According to an embodiment, the user interface device 200 may include a plurality of processors 270 or may also not include any processor 270.

In a case where the processor 270 is not included in the user interface device 200, the user interface device 200 may operate under the control of a processor of another apparatus within the vehicle 100 or under the control of the control unit 170.

The user interface device 200 may be referred to as a vehicular display apparatus. The user interface device 200 may operate under the control of the control unit 170.

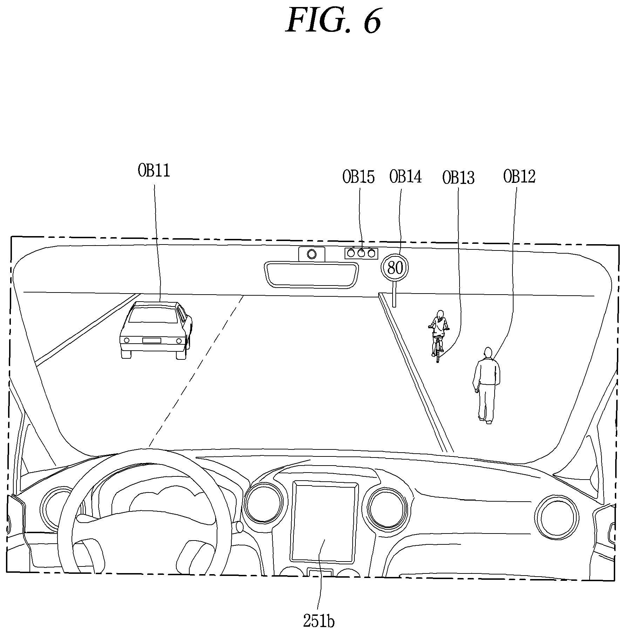

The object detection apparatus 300 is an apparatus for detecting an object located outside the vehicle 100. Examples of the object may include a variety of things related to the drive operation of the vehicle 100. With reference to FIGS. 5 and 6, examples of an object O may include a traffic lane OB10, a different vehicle OB11, a pedestrian OB12, a two-wheeled vehicle OB13, traffic signs OB14, traffic lights OB15, ambient light, a road, a structure, a speed bump, a landmark, an animal, and the like.

The lane OB10 may be a traveling lane, a lane adjacent to the traveling lane, or a lane along which another vehicle in the opposite direction is traveling. The lane OB10 may conceptually include the left and right boundary lines forming a lane.

The different vehicle OB11 may be a vehicle which is traveling in the vicinity of the vehicle 100. The different vehicle may be a vehicle located within a predetermined distance from the vehicle 100. For example, the different vehicle OB11 may be a vehicle that is traveling ahead of or behind the vehicle 100.

The pedestrian OB12 may be a person located in the vicinity of the vehicle 100. The pedestrian OB12 may be a person located within a predetermined distance from the vehicle 100. For example, the pedestrian OB12 may be a person located on a sidewalk or roadway.

The two-wheeled vehicle OB12 may be a person-carrying vehicle that is located in the vicinity of the vehicle 100 and moves on two wheels. The two-wheeled vehicle OB12 may refer to a person-carrying vehicle that is located within a predetermined distance from the vehicle 100 and has two wheels. For example, the two-wheeled vehicle OB13 may be a motorcycle or a bicycle that is located on a sidewalk or roadway.

Examples of the traffic signals may include traffic lights OB15, traffic signs OB14, and a pattern or text drawn on a road surface.

The ambient light may be light generated from a lamp provided on a different vehicle. The ambient light may be light generated by a streetlight. The ambient light may be solar light.

Examples of the road may include a road surface, a curve, an upward slope, a downward slope, and the like.

The structure may be an object that is located in the vicinity of a road and fixed on the ground. Examples of the structure may include a street lamp, a roadside tree, a building, an electric pole, traffic lights, a bridge, and the like.

Examples of the landmark may include a mountain, a hill, and the like.

The objects may be classified into moving objects and fixed objects. Examples of the moving object may conceptually include a different vehicle and a pedestrian. Examples of the fixed object may include traffic signals, a road, and a structure.

The object detection apparatus 300 may include a camera 310, a radar 320, LiDAR 330, an ultrasonic wave sensor 340, an infrared sensor 350, and a processor 370.

According to an embodiment, the object detection apparatus 300 may include one or more constituent elements in addition to constituent elements described in the present specification or may omit one or more of the described constituent elements.

The camera 310 may be located on an appropriate portion of the exterior of the vehicle to acquire an image of the surroundings of the vehicle. The camera 310 may be a mono camera, a stereo camera 310a, an Around View Monitoring (AVM) camera 310b, or a 360-degree camera.

For example, the camera 310 may be arranged adjacent to the front windshield within the vehicle to acquire an image of the surroundings ahead of the vehicle. Alternatively, the camera 310 may be arranged in the vicinity of the front bumper or the radiator grill.

For example, the camera 310 may be arranged adjacent to the rear glass pane within the vehicle to acquire an image of the surroundings behind the vehicle. Alternatively, the camera 310 may be arranged adjacent to the rear bumper, the trunk, or the tail gate.

For example, the camera 310 may be arranged adjacent to at least one of the side windows within the vehicle 100 to acquire an image of the surroundings alongside the vehicle 100. Alternatively, the camera 310 may be arranged in the vicinity of the side mirror, the fender, or the door.

The camera 310 may provide an acquired image to the processor 370.

The radar 320 may include electromagnetic wave transmission and reception units. The radar 320 may be realized in compliance with a pulse radar scheme or a continuous wave radar scheme in accordance with the principle of emitting a radio wave. The radar 320 may be realized in compliance with a Frequency Modulated Continuous Wave (FMCW) scheme or a Frequency Shift Keying (FSK) scheme, each being among continuous wave radar schemes, that varies depending on a signal waveform.

The radar 320 may detect an object using a Time of Flight (TOF) technique or a phase-shift technique, with an electromagnetic wave as a medium, and may detect the location of the detected object, the distance to the detected object, and the relative speed with respect to the detected object.

The radar 320 may be arranged on an appropriate position on the exterior of the vehicle to detect an object that is located in front of, behind, or alongside the vehicle.

The LiDAR 330 may include laser transmission and reception units. The LiDAR 330 may be realized using the Time of Flight (TOF) technique or the phase-shift technique.

The LiDAR 330 may be realized as either a drive type or non-drive type LiDAR.

In a case where the LiDAR 330 is realized as the drive type LiDAR, the LiDAR 330 may rotate by a motor and may detect an object in the vicinity of the vehicle 100.

In a case where the LiDAR 330 may be realized as the non-drive type LiDAR, the LiDAR 330 may detect, through light steering, an object located within a predetermined range from the vehicle 100. The vehicle 100 may include a plurality of non-driven type LiDARs 330.

The LiDAR 330 may detect an object using the Time of Flight (TOF) technique or the phase-shift technique, with laser light as a medium, and may detect the location of the detected object, the distance to the detected object, and the relative speed with respect to the detected object.

The radar 330 may be arranged on an appropriate position on the exterior of the vehicle to detect an object that is located in front of, behind, or alongside the vehicle.

The ultrasonic wave sensor 340 may include ultrasonic wave transmission and reception units. The ultrasonic wave sensor 340 may detect an object on the basis of an ultrasonic wave and detect the location of the detected object, the distance to the detection object, and the relative speed with respect to the detected object.

The ultrasonic wave sensor 340 may be arranged on an appropriate position on the exterior of the vehicle to detect an object located in front of, behind, or alongside the vehicle.

The infrared sensor 350 may include infrared transmission and reception units. The infrared sensor 340 may detect an object on the basis of infrared light, and may detect the location of the detected object, the distance to the detected object, and the relative speed with respect to the detected object.

The infrared sensor 350 may be arranged on an appropriate position on the exterior of the vehicle to detect an object located in front of, behind, or alongside the vehicle.

The processor 370 may control the overall operation of each unit of the object detection apparatus 300.

The processor 370 may detect an object on the basis of an acquired image and may track the detected object. The processor 370 may perform operations, such as computation of the distance to an object and computation of the relative speed with respect to the object, through an image processing algorithm.

The processor 370 may detect an object on the basis of a reflected electromagnetic wave, resulting from an emitted electromagnetic wave being reflected off the object, and may track the detected object. The processor 370 may perform operations, such as computation of the distance to an object and computation of the relative speed with respect to the object, on the basis of the reflected electromagnetic wave.

The processor 370 may detect an object on the basis of reflected laser light, resulting from an emitted laser being reflected off the object, and may track the detected object. The processor 370 may perform operations, such as computation of the distance to an object and computation of the relative speed with respect to the object, on the basis of the reflected laser light.

The processor 370 may detect an object on the basis of a reflected ultrasonic wave, resulting from an emitted ultrasonic wave being reflected off the object, and may track the detected object. The processor 370 may perform operations, such as computation of the distance to an object and computation of the relative speed with respect to the object, on the basis of the reflected ultrasonic wave.

The processor 370 may detect an object on the basis of reflected infrared light, resulting from emitted infrared light being reflected off the object, and may track the detected object. The processor 370 may perform operations, such as computation of the distance to an object and computation of the relative speed with respect to the object, on the basis of the reflected infrared light.

According to an embodiment, the object detection apparatus 300 may include a plurality of processors 370 or may not include any processor 370. For example, each of the camera 310, the radar 320, the LiDAR 330, the ultrasonic 340, and the infrared sensor 350 may individually include its own processor.

In a case where the processor 370 is not included in the object detection apparatus 300, the object detection apparatus 300 may operate under the control of a processor of an apparatus within the vehicle 100 or under the control of the control unit 170.

The object detection apparatus 400 may operate under the control of the control unit 170.

The communication apparatus 400 is an apparatus for performing communication with an external device. The external device here may be another vehicle, a mobile terminal, or a server.

To perform communication, the communication apparatus 400 may include a transmission antenna, a reception antenna, and at least one of the following: a radio frequency (RF) circuit or an RF device, each of which is capable of supporting various communication protocols.

The communication apparatus 400 may include a short-range communication unit 410, a location information unit 420, a V2X communication unit 430, an optical communication unit 440, a broadcast transceiver 450, and a processor 470.

According to an embodiment, the communication apparatus 400 may include one or more constituent elements in addition to constituent elements in the present specification or may omit one or more of the described constituent elements.

The short-range communication unit 410 is a unit for short-range communication. The short-range communication unit 410 may support short-range communication using at least one of the following technologies: Bluetooth^{™}, Radio Frequency IDentification (RFID), Infrared Data Association (IrDA), Ultra-Wide Band (UWB), ZigBee, Near Field Communication (NFC), Wireless-Fidelity (WI-Fi), Wi-Fi Direct, or Wireless Universal Serial Bus (USB).

The short-range communication unit 410 may form short-range wireless area networks and may perform short-range communication between the vehicle 100 and at least one external device.

The location information unit 420 is a unit for acquiring location information of the vehicle 100. For example, the location information unit 420 may include a Global Positioning System (GPS) module or a Differential Global Positioning System (DGPS) module.

The V2X communication unit 430 is a unit for performing wireless communication with a server (Vehicle to Infrastructure (V2I)), another vehicle (Vehicle to Vehicle (V2V)), or a pedestrian (Vehicle to Pedestrian (V2P)). The V2X communication unit 430 may include an RF circuit capable of supporting protocols for communication with an infrastructure (V2I), communication between vehicles (V2V), and communication with a pedestrian (V2P).

The optical communication unit 440 is a unit for performing communication with an external device, with light as a medium. The optical communication unit 440 may include an optical transmission part that converts an electric signal into an optical signal and transmits the resulting optical signal to the outside, and an optical reception part that converts the received optical signal back into the electric signal.

According to an embodiment, the optical transmission part may be formed integrally with a lamp included in the vehicle 100.

The broadcast transceiver 450 is a unit for receiving a broadcast signal from an external broadcast management server or transmitting a broadcast signal to the external broadcast management server over a broadcast channel. The broadcast channels may include a satellite channel and a terrestrial channel. The broadcast signals may include a TV broadcast signal, a radio broadcast signal, and a data broadcast signal.

The processor 470 may control the overall operation of each unit of the communication apparatus 400.

According to an embodiment, the communication apparatus 400 may include a plurality of processors 470 or may not include any processor 470.

In a case where the processor 470 is not included in the communication apparatus 400, the communication apparatus 400 may operate under the control of a processor of another device within the vehicle 100 or under the control of the control unit 170.

The communication apparatus 400, along with the user interface device 200, may realize a vehicular display device. In this case, the vehicular display device may be referred to as a telematics device or an Audio Video Navigation (AVN) device.

The communication apparatus 400 may operate under the control of the control unit 170.

The driving maneuver apparatus 500 is an apparatus for receiving a user input for drive operation.

In the manual mode, the vehicle 100 may drive on the basis of a signal provided by the driving maneuver apparatus 500.

The driving maneuver apparatus 500 may include the steering input device 510, an acceleration input device 530 and a brake input device 570.

The steering input device 510 may receive an input regarding the traveling direction of the vehicle 100 from the user. The steering input device 510 is preferably configured in the form of a wheel, allowing a steering input by the wheel's rotation. According to an embodiment, the steering input device may also be configured in the form of a touch screen, a touchpad, or a button.

The acceleration input device 530 may receive an input for accelerating the vehicle 100 from the user. The brake input device 570 may receive an input for decelerating the vehicle 100 from the user. The acceleration input device 530 and the brake input device 570 are preferably configured in the form of a pedal. According to an embodiment, the acceleration input device or the brake input device may also be configured in the form of a touch screen, a touchpad or a button.

The driving maneuver apparatus 500 may operate under the control of the control unit 170.

The vehicle drive apparatus 600 is an apparatus that electrically controls driving of various apparatuses within the vehicle 100.

The vehicle drive apparatus 600 may include a power train drive unit 610, a chassis drive unit 620, a door/window drive unit 630, a safety apparatus drive unit 640, a lamp drive unit 650, and an air-conditioner drive unit 660.

According to an embodiment, the vehicle drive apparatus 600 may include one or more constituent elements in addition to constituent elements in the present specification or may omit one or more of the described constituent elements.

The vehicle drive apparatus 600 may include a processor. Each unit of the vehicle drive apparatus 600 may individually include its own processor.

The power train drive unit 610 may control the operation of a power train apparatus.

The power train drive unit 610 may include a motive power source drive part 611 and a transmission drive part 612.

The motive power source drive part 611 may execute control on a motive power source of the vehicle 100.

For example, in a case where the motive power source of the vehicle is a fossil fuel-based engine, the motive power source drive part 610 may execute electronic control on the engine. Accordingly, the output torque and other parameters of the engine may be controlled. The motive power source drive part 611 may adjust the engine output torque under the control of the control unit 170.

For example, in a case where the motive power source of the vehicle is an electric energy-based motor, the motive power source drive part 610 may execute control on the motor. The motive power source drive part 610 may adjust the rotational speed, torque, and other parameters of the motor under the control of the control unit 170.

The transmission drive part 612 may execute control on the transmission. The transmission drive unit 612 may adjust a state of the transmission. The transmission drive part 612 may change the state of the transmission to Drive (D), Reverse (R), Neutral (N), or Park (P).

In a case where the motive power source of the vehicle is an engine, the transmission drive part 612 may adjust an engaged state of a gear in Drive (D).

The chassis drive unit 620 may control the operation of the chassis apparatus. The chassis drive unit 620 may include a steering drive part 621, a brake drive part 622, and a suspension drive part 623.

The steering drive part 621 may execute electronic control on a steering apparatus within the vehicle 100. The steering drive part 621 may change the traveling direction of the vehicle.

The brake drive part 622 may execute electronic control on a brake apparatus within the vehicle 100. For example, the brake drive part 622 may reduce the speed of the vehicle 100 by controlling the operation of the brakes provided on the wheels.

The brake drive part 622 may individually control each of the brakes. The brake drive part 622 may control brake forces to be applied to a plurality of wheels so that they differ from one another.

The suspension drive part 623 may execute electronic control on a suspension apparatus within the vehicle 100. For example, in a case where a road surface is uneven, the suspension drive part 623 may reduce the vibration of the vehicle 100 by controlling the suspension apparatus. The suspension drive part 623 may individually control each of the suspensions.

The door/window drive unit 630 may execute electronic control on a door apparatus or a window apparatus within the vehicle 100.

The door/window drive unit 630 may include a door drive part 631 and a window drive part 632.

The door drive part 631 may execute control on the door apparatus. The door drive part 631 may control the opening or closing of a plurality of doors included in the vehicle 100. The door drive part 631 may control the opening or closing of the trunk or the tailgate. The door drive part 631 may control the opening or closing of the sunroof.

The window drive part 632 may execute electronic control on the window apparatus. The window drive part 632 may control the opening or closing of a plurality of windows included in the vehicle 100.

The safety apparatus drive unit 640 may execute electronic control on various safety apparatuses within the vehicle 100.

The safety apparatus drive unit 640 may include an airbag drive part 641, a seatbelt drive part 642, and a pedestrian protection apparatus drive part 643.

The airbag drive part 641 may execute electronic control on an airbag apparatus within the vehicle 100. For example, when a risk is detected, the airbag drive part 641 may control the airbag to deploy.

The seatbelt drive part 642 may execute electronic control on a seatbelt apparatus within the vehicle 100. For example, when a risk is detected, the seatbelt drive part 642 may control the seatbelt apparatus to secure occupants in 110FL, 110FR, 110RL, and 110RR, respectively, by tightening seat belts.

The pedestrian protection apparatus drive part 643 may execute electronic control on the hood lift and the pedestrian airbag. For example, when a collision with a pedestrian is detected, the pedestrian protection apparatus drive part 643 may control the hood lift and the pedestrian airbag to deploy.

The lamp drive part 650 may execute electronic control on various lamp apparatuses within the vehicle 100.

The air-conditioner drive unit 660 may execute electronic control on an air conditioner within the vehicle 100. For example, when the temperature within the vehicle 100 is high, the air-conditioner drive unit 660 may control the air conditioner to operate in such a manner as to supply cool air into the vehicle 100.

The vehicle drive apparatus 600 may include a processor. Each unit of the vehicle drive apparatus 600 may individually include its own processor.

The vehicle drive apparatus 600 may operate under the control of the control unit 170.

The drive operation system 700 is a system that controls various drive operations of the vehicle 100. The drive operation system 700 may operate in the autonomous traveling mode.

The drive operation system 700 may include the traveling system 710, the parking-lot departure system 740, and the parking system 750.

According to an embodiment, the drive operation system 700 may include one or more constituent elements in addition to constituent elements described in the present disclosure or may emit one or more of the described constituent elements.

The drive operation system 700 may include a processor. Each unit of the drive operation system 700 may individually include its own processor.

According to an embodiment, in a case where the drive operation system 700 may be realized in software, the drive operation system 700 may also conceptually operate at a lower level than the control unit 170.

According to an embodiment, the drive operation system 700 may conceptually include at least one of the following: the user interface device 200, the object detection apparatus 300, the communication apparatus 400, the vehicle drive apparatus 600, or the control unit 170.

The traveling system 710 may enable the vehicle 100 to travel.

The traveling system 710 may be provided with navigation information from the navigation system 770 and provide a control signal to the vehicle drive apparatus 600, thereby enabling the vehicle 100 to travel. The traveling system 710 may be provided with object information from the object detection apparatus 300 and provide a control signal to the vehicle drive apparatus 600, thereby enabling the vehicle 100 to travel. The traveling system 710 may be provided with a signal from an external device through the communication apparatus 400 and provide a control signal to the vehicle drive apparatus 600, thereby enabling the vehicle 100 to travel.

The parking-lot departure system 740 may enable the vehicle 100 to depart from a parking lot.

The parking-lot departure system 740 may be provided with navigation information from the navigation system 770 and provide a control signal to the vehicle drive apparatus 600, thereby enabling the vehicle 100 to depart from the parking lot. The parking-lot departure system 740 may be provided with object information from the object detection apparatus 300 and provide a control signal to the vehicle drive apparatus 600, thereby enabling the vehicle 100 to depart from the parking lot. The parking-lot departure system 740 may be provided with a signal from an external device through the communication apparatus 400 and provide a control signal to the vehicle drive apparatus 600, thereby enabling the vehicle 100 to depart from the parking lot.

The parking system 750 may enable the vehicle 100 to park at the parking lot.

The parking system 750 may be provided with navigation information from the navigation system 770 and provide a control signal to the vehicle drive apparatus 600, thereby enabling the vehicle 100 to park at the parking lot. The parking system 750 may be provided with object information from the object detection apparatus 300 and provide a control signal to the vehicle drive apparatus 600, thereby enabling the vehicle 100 to park at the parking lot. The parking system 750 may be provided with a signal from an external device through the communication apparatus 400 and provide a control signal to the vehicle drive apparatus 600, thereby enabling the vehicle 100 to park at the parking lot.

The navigation system 770 may provide navigation information. The navigation information may include at least one of the following: map information, information about a set destination, path information based on the set destination, information about various objects on a path, lane information, or information about the current location of the vehicle.

The navigation system 770 may include a memory and a processor. The navigation information may be stored in the memory. The processor may control the operation of the navigation system 770.

According to an embodiment, the navigation system 770 may update prestored information by receiving information from an external device through the communication apparatus 400.

According to an embodiment, the navigation system 770 may also be classified as a sub-constituent element of the user interface device 200.

The sensing unit 120 may sense a state of the vehicle. The sensing unit 120 may include posture sensors (for example, a yaw sensor, a roll sensor, and a pitch sensor), a collision sensor, a wheel sensor, a speed sensor, an inclination sensor, a weight detection sensor, a heading sensor, a gyro sensor, a position module, a vehicle forward/backward movement sensor, a battery sensor, a fuel sensor, a tire sensor, a steering sensor sensing the turning of a steering wheel, an in-vehicle temperature sensor, an in-vehicle humidity sensor, an ultrasonic sensor, an illumination sensor, an accelerator position sensor, a brake pedal position sensor, and other sensors.

The sensing unit 120 may acquire vehicular posture information, vehicular collision information, vehicular direction information, vehicular location information (GPS information), vehicular angle information, vehicular speed information, vehicular acceleration information, vehicular inclination information, vehicular forward/backward movement information, battery information, fuel information, tire information, vehicular lamp information, in-vehicle temperature information, and in-vehicle humidity information. Furthermore, the sensing unit 120 may acquire signals that result from sensing a steering wheel rotation angle, outside-vehicle illumination, pressure applied to an acceleration pedal, pressure applied to a brake pedal, and the like.

The sensing unit 120 may further include an acceleration pedal sensor, a pressure sensor, an engine speed sensor, an air flow sensor (AFS), an air temperature sensor (ATS), a water temperature sensor (WTS), a throttle position sensor (TPS), a TDC sensor, a crank angle sensor (CAS), and other sensors.

The vehicular interface unit 130 may serve as a path to various types of external devices connected to the vehicle 100. For example, the vehicular interface unit 130 may include a port that enables a connection to a mobile terminal and may be connected to the mobile terminal through the port. In this case, the vehicular interface unit 130 may exchange data with the mobile terminal.

The vehicular interface unit 130 may serve as a path for supplying electric energy to the connected mobile terminal. In a case where the mobile terminal is electrically connected to the vehicular interface unit 130, the vehicular interface unit 130 may supply electrical energy, supplied from the power supply unit 190, to the mobile terminal under the control of the control unit 170.

The memory 140 is electrically connected to the control unit 170. Basic data for the units, control data for controlling the operations of the units, and data, which are input and output, may be stored in the memory 140. Examples of the memory 140 may include various hardware storage devices, such as a ROM, a RAM, an EPROM, a flash drive, and a hard drive. Programs and the like for processing or control by the control unit 170 and various data for the overall operation of the vehicle 100 may be stored in the memory 140.

According to an embodiment, the memory 140 may be configured to be integrated with the control unit 170 or may be realized as a sub-constituent element of the control unit 170.

The control unit 170 may control the overall operation of each unit within the vehicle 100. The control unit 170 may be referred to as an Electronic Control Unit (ECU).

The power supply unit 190 may supply electric power necessary for the operation of each constituent element under the control of the control unit 170. Specifically, the power supply unit 190 may be supplied with electric power from a battery within the vehicle or from other sources.

One or more processes and control units 150, included in the vehicle 100, may be realized using at least one of the following: application-specific integrated circuits (ASICs), digital signal processors (DSPs), digital signal processing devices (DSPDs), programmable logic devices (PLDs), field-programmable gate arrays (FPGAs), processors, controllers, micro-controllers, microprocessors, and electronic units for performing other functions.

An apparatus/cloud server that provides an AR signage platform service according to the present disclosure may communicate with the user interface device (hereinafter referred to as the "user terminal") 200 of the vehicle 100 or the navigation system 770 and may provide a platform or AR signage data for either displaying single AR digital signage or story level-based AR digital signage in a display region within the traveling image.

The AR digital signage disclosed in the present specification refers to multimedia information displayed in a display region within the traveling image, for example, on a building or a region related to the building, using augmented reality (AR) technology. The AR digital signage results from realizing the same functionality as an electronic display board, using the AR technology.

The story level-based AR digital signage, disclosed in the present disclosure, is displayed in the display region. This involves displaying AR digital signage pieces matched with content information pieces corresponding to story levels, respectively, the AR digital signage pieces being stacked on top of each other, on the basis of story-level information of regions related to content items (for example, advertisement information, brand information, new information, or the like) for a plurality of POIs.

The 'display region' disclosed in the present disclosure refers to a location or a region, included within the traveling image of the surroundings ahead of the vehicle, where the AR digital signage is displayed. Examples of the display region may include all regions of each of the following: a building with a plurality of stories, the vicinity of the building, a guide rail near a traveling road, the surface of the traveling road, or other facilities.

In addition, the 'traveling image' disclosed in the present specification may include an image captured through a camera sensor (or smartglasses with the same functionality as the camera sensor). Furthermore, the traveling image may include an image reflected off an LCD screen through the camera sensor, an image of a real space visible through a windshield/dashboard, onto which the AR digital signage is directly projected, a digitally twinned three-dimensional image, and other types of images.

In the present specification, displaying the story level-based AR digital signage in the display region within the traveling image begins by computing a reference point for a real display region (for example, a structure or a building) on the basis of x, y, z spatial coordinates of the real display region and story-level information thereof. This computation of the reference point is a process for providing a sense of reality that is experienced when displaying an electronic signage display board on a real building. This displaying is performed by overlapping a point in time for a real traveling road or the above-described traveling image and a point in time for a screen onto which content information related to a plurality of POI information pieces is rendered.

Then, the initial location of the display region within the traveling region onto which the traveling image is to be mapped in a manner that sequentially stacks a plurality of digital signage pieces on top of each other is computed on the basis of the computed reference point. Next, through an AR engine, the story level-based AR digital signage is rendered to be displayed in a stacked manner upward from the computed initial location. Consequently, the story level-based AR digital signage may be displayed in the display region within the traveling image in such a manner as to correspond to each story level.

An AR signage display apparatus 700 according to an embodiment of the present disclosure, as illustrated in FIG. 7, may be realized as an electronic component of the vehicle 100 or one portion of a system, or as a separate independent apparatus or system. Alternatively, the AR signage display apparatus 700 may also be realized in the form of a program consisting of commands that are executed by a processor, such as a processor in a user terminal of the vehicle 100.

The AR signage display apparatus 700 may communicate with the vehicle 100 and thus may collect sensing data through sensors (for example, GPS/UR, Electronic Horizon, and ADAS sensors, and the like) provided in the vehicle, receive navigation information and user information, and perform filtering or similar processing on the collected data and the received information.

The AR signage display apparatus 700 may communicate with the apparatus/cloud server that provides the AR signage platform service, and thus may receive the AR signage data for generating and displaying the AR digital signage and perform filtering or similar processing on the received AR signage data.

The AR signage display apparatus 700 may determine a situation related to restricting the display of the AR digital signage on the basis of the received sensing data or the like from the vehicle and the AR signage data, and correct the AR signage data in such a manner to restrict the display using a restriction technique method matched with the determined situation. The AR signage display apparatus 700 may perform a display update (rendering update) or display restriction on the AR digital signage on the basis of the corrected AR signage data.

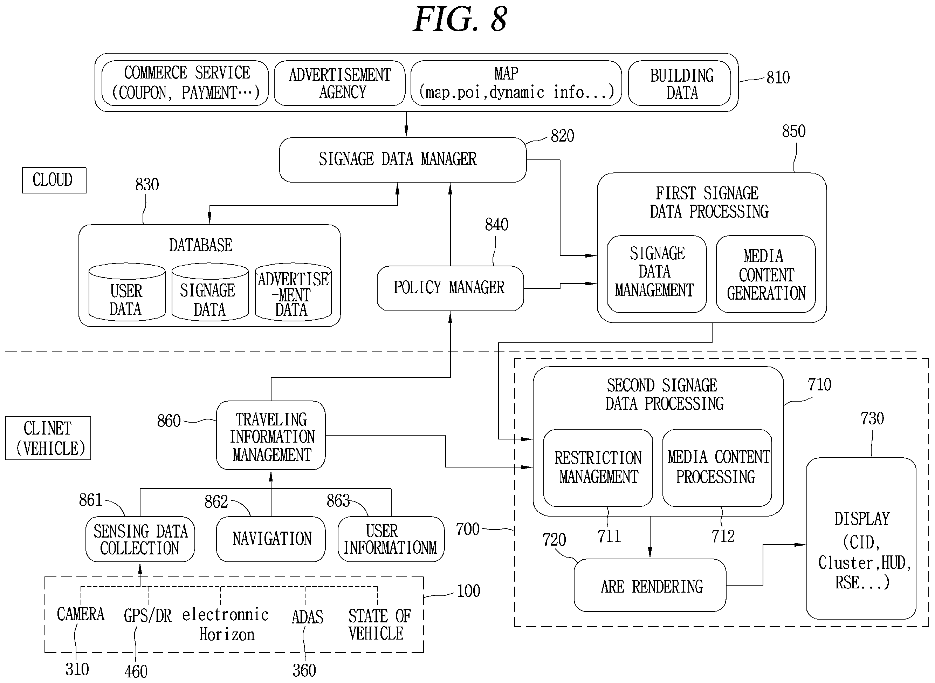

FIG. 8 is a block diagram illustrating the structure of an overall system related to restricting the display of an AR digital signage according to an embodiment of the present disclosure.

As illustrated in FIG. 8, the overall system may be divided into the vehicle side and the cloud side. The AR signage display apparatus 700 of the vehicle according to the present disclosure may be realized as a separate independent apparatus between the vehicle side and the cloud side. In addition, the vehicle side and the cloud side, as described below, may each be configured with a plurality of modules to provide a service for the AR digital signage.

The cloud side may include an external data source 810, a signage data manager 820, a database 830, a policy manager 840, and a first signage data processing module 850. The above-mentioned term 'cloud side' may refer to the same concept as the apparatus/cloud server that provides the AR signage platform service described below.

The external data source 810 is a source of various content pieces related to generating the AR digital signage. For example, the external data source 810 may include a commerce service (for example, payment using a coupon), an advertisement agency, map information (for example, map data, POI data, dynamic data, and the like), building data (for example, story-level information, and the like), and the like.

The map data here may refer to, for example, two-dimensional or three-dimensional map information that includes POI information for displaying the AR digital signage. The map data may include types of roads, the number of traveling lanes, width data about each traveling lane, and the like.

In addition, the dynamic data may include real-time traffic information (for example, traffic information on a per-road/lane basis), accident information, weather information, information related to using an AR coupon in the vicinity of the current location of the vehicle, and the like.

In addition, the building data may include a building's footprint information, entrance information, story-level information, and the like.

In addition, for example, the advertisement agency may provide advertisement information (for example, advertisement information collected in conjunction with databases such as NoSQL databases or MongoDB) about content for each POI.

The signage data manager 820 is an interface that communicates with the external data source 810 and may reconfigure data received from the external data source 810 and transfer the reconfigured data to the database 830. In addition, the signage data manager 820 may manage the AR signage data for displaying the AR digital signage.

The database 830 may include user data DB, signage data DB, advertisement data DB, and similar datasets, in such a manner that data are stored in separate regions and managed based on their data attributes. For example, user profile data may be stored and managed in the user data DB, the AR signage data for displaying the AR digital signage may be stored and managed in the signage data BD, and various types of advertisement content monitoring information may be stored and managed in the advertisement data DB.

The policy manager 840 may determine a display policy for the AR digital signage using vehicle data and user data that are transmitted from a traveling information management unit 860 on the vehicle side. The policy manager 840 may make a request for a set of the AR signage data corresponding to the AR digital signage displayable at the current location of the vehicle, based on the determined display policy.

A client, that is, the vehicle side, may include the traveling information management unit 860 that includes the vehicle's sensing data collection unit 861, navigation unit 862, and user information unit 863. Various types of vehicle-related information collected in the traveling information management unit 860 may be provided to the cloud side and the AR signage display apparatus 700.

Specifically, the sensing data collection unit 861 of the vehicle may collect sensing data through various sensors provided in the vehicle. Examples of the sensing data include image data (for example, a traveling image and object recognition information) collected through the camera 310 in the vehicle 100, GPS/DR data 460, Electronic Horizon data, ADAS data 360, V2X data (for example, situational data collectible through V2V and V2I), vehicle state data (for example, an abnormal vehicle state, an amount of remaining electric power/amount of charging, replacement times for consumable components), and the like.

At this point, the ADAS data 360 includes traveling-related sensing data, such as a traveling direction and speed and a distance to a lane. The GPS/DR data 460 includes location data of the vehicle acquired through a vehicle navigation system.

The sensing data collection unit 861 of the vehicle may detect an object, a dangerous situation, or the like in the vicinity of the vehicle on the basis of the sensing data collected through the sensors described above. For example, the sensing data collection unit 861 may detect an obstacle or an object (for example, a pedestrian, a vehicle, and other mobility means (for example, a bicycle, a motor-powered quick board, and the like)) in the vicinity of the vehicle on the basis of the ADAS data 360. In addition, the sensing data collection unit 861 may recognize information about an estimated vehicle traveling path on the basis of Electronic Horizon data.

In addition, although not illustrated, the sensing data collection unit 861 may recognize a traffic situation in the vicinity of the vehicle by collecting information, such as traffic signals ahead of the vehicle, and traffic-related information through V2X communication.

The navigation unit 862 may collect types of traveling roads, the number of lanes, the width of each lane, neighboring-building information, building coordinate information, map-related information, such as geographic information of a road along which the vehicle is traveling, and navigation path information (for example, guidance information, destination/stopover, and similar data), using map information of the vehicle.

The user information unit 863 may collect profile information, such as basic user identification information, user preference information (for example, user preference POI information, registered hashtag, and the like), traveling history information (for example, recent destinations, searched-for places, and user-registered points), and coupon usage history information.

The traveling information management unit 860 may extract traveling context information on the basis of information acquired from the sensing data collection unit 861, the navigation unit 862, and the user information unit 863, for example, on the basis of sensing data, vehicle state information, navigation data, user profile information, and the like. In addition, the traveling information management unit 860 may include other vehicle traveling modes (for example, manual, automatic, and semi-autonomous modes), other setting modes (for example, a pet mode, a camping mode, and the like), and the like.

When the extracted traveling context information is transferred to the policy manager 840 on the cloud side, the policy manager 840 generates the display policy for the AR digital signage in the vicinity of the vehicle based on the traveling situation of the vehicle and the current location of the vehicle on the basis of the extracted traveling context information.

The first signage data processing module 850 on the cloud side configures the set of the AR signage data displayable at the current location of the vehicle based on the display policy for the AR digital signage generated by the policy manager 840. To this end, the first signage data processing module 850 may include a signage data management module and a media content generation module.

Subsequently, the AR signage display apparatus 700 of the vehicle according to the present disclosure may receive the result of the first signage data processing module 850 and the information of the traveling information management unit 860. A method of restricting the display of the AR digital signage may be determined by a second signage data processing module 710 based on the current traveling situation of the vehicle.

To this end, the second signage data processing module 710 may include a restriction management module 711 and a media content processing module 712. The restriction management module 711 determines the method of restricting the display of the AR digital signage, based on the current traveling situation of the vehicle. The media content processing module 712 processes the AR signage data corresponding to the AR digital signage to be displayed in the display region within the traveling image, depending on the determined method of restricting the display of the AR digital signage.

At this point, the method of restricting the display of the AR digital signage, which is performed by the restriction management module 711, may be determined by one of the following: adjusting the size of the AR digital signage, adjusting the location thereof, editing one region thereof, adjusting the transparency thereof, or converting the form (to a symbol icon or the like), or by a combination of these. In other words, the restriction management module 711 performs secondary processing on the set of the AR signage data received from the first signage data processing module 850.

An AR rendering module 720 performs AR rendering of all portions or one portion of the AR digital signage on the basis of the set of the AR signage data varied by the second signage data processing module 710, in such a manner as to overlap in the display region within the traveling image.

In other words, the AR rendering module 720 AR-merges the secondarily processed AR signage data in real time in the display region within the traveling image/map image acquired through the camera or the vision sensor in the vehicle. Accordingly, the real traveling road and the AR digital signage have the same point in time for rendering onto a screen.

A display 730 is configured in such a manner that the data AR-merged by the AR rendering module 720 are displayed on the display 730. For example, the display 730 may include one or more of the following displays of the vehicle: a CID, a cluster, a HUD, or an RSE.

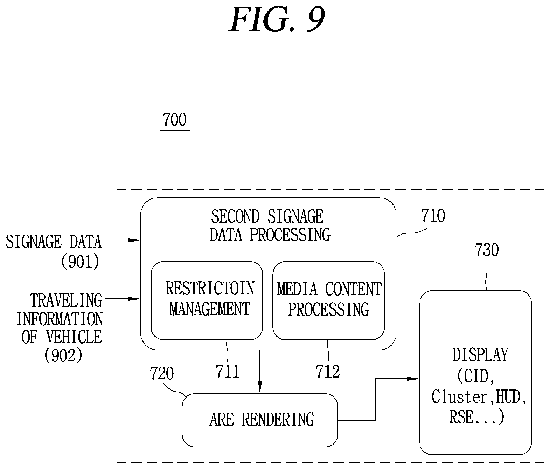

FIG. 9 is a view that is referenced to describe the configuration of the AR signage display apparatus 700 of the vehicle and input and output data, according to an embodiment of the present disclosure.

With reference to FIG. 9, the AR signage display apparatus 700 of the vehicle may display the AR digital signage in real time based on the traveling information or traveling situation information of the vehicle and/or operate in such a manner as to restrict the display of the AR digital signage.

First, the AR signage display apparatus 700 may communicate with the vehicle (the vehicle side in FIG. 8) through a communication module (not illustrated) and thus receive vehicle traveling information 902.

In addition, the AR signage display apparatus 700 may communicate with the cloud server (the cloud side in FIG. 8) providing the AR signage platform service, through the communication module, and thus receive signage data 901.

To this end, the second signage data processing module 710 (or 'processor') of the AR signage display apparatus 700 may make a request to the cloud server for the AR signage data for displaying content for a POI in the vicinity of the vehicle, as digital signage. This POI is determined on the basis of the current location of the vehicle and the sensing data, which are included in the vehicle traveling information 902.

The second signage data processing module 710 may determine the occurrence of the condition for restricting the display of the digital signage on the basis of the vehicle traveling information 902 and the map information, through the restriction management module 711 and the media content processing module 712, and may correct the AR signage data (or the set of the signage data) matched with the location at which the condition for restricting the display occurs.

At this point, for the correction of the AR signage data, a correction technique may be determined in a manner that varies depending on the result of analyzing the condition for restricting the display. For example, whether or not to change the location of the AR digital signage, whether or not to adjust the size thereof, whether or not to convert the form thereof, or whether or not to adjust the transparency thereof, or whether or not to display the AR digital signage may be determined in a manner that varies depending on the result of analyzing the condition for restricting the display.

In addition, the second signage data processing module 710 may recognize whether or not a situation requiring a driver to keep their eyes forward occurs, based on traveling environmental information and the sensing data of the vehicle, which are included in the vehicle traveling information 902.

At this point, the occurrence of the situation requiring the driver to keep their eyes forward may refer to one of the following: detection of objects overlapping within the traveling image or of an object approaching within the traveling image, detection of an increase in a traveling speed of the vehicle or of the traveling speed reaching or exceeding a reference speed, detection of a traffic congestion situation in the vicinity of the vehicle, detection of a pedestrian protection region, entering of a speed limit region by the vehicle, or occurrence of a decrease in visible distance based on road information or weather information, each of which is based on the traveling environmental information and the sensing data of the vehicle.

The second signage data processing module 710 may correct the AR signage data (or the set of the AR signage data), based on the recognition of the situation requiring the driver to keep their eyes forward, in such a manner that a region related to the traveling environmental information is not hidden from view.

The AR rendering module 720 performs rendering by AR-merging the digital signage, that is, the set of the corrected AR signage data, with the traveling image in the display region within the traveling image, on the basis of the AR signage data. The result of performing AR rendering is displayed on the display 730.

Various embodiments in which the AR digital signage or the display region in which the AR digital signage is displayed is restricted depending on the traveling information of the vehicle or the traveling environment of the vehicle are described in detail below.

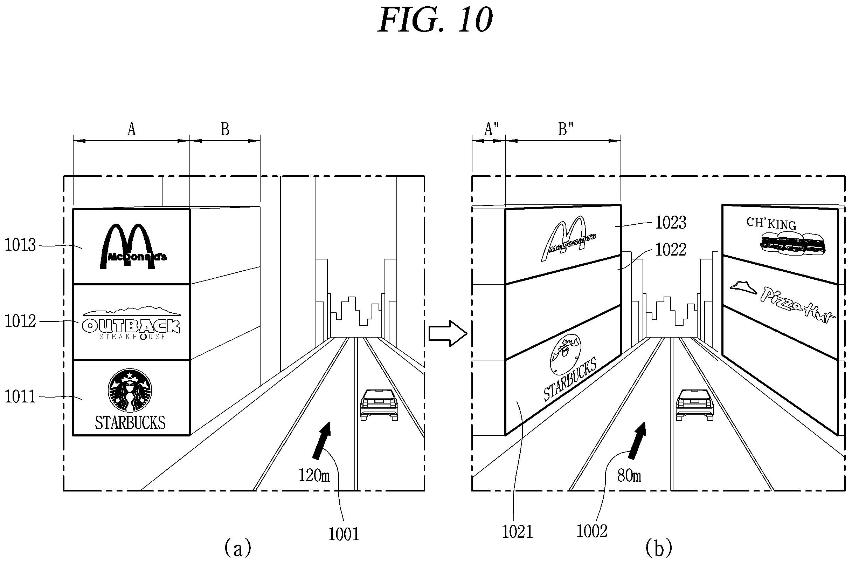

FIG. 10 is a view that is referenced to describe the display that is performed by employing the technique of restricting the display of the AR digital signage that varies with a change in the area of the display region or with a change in an image distortion rate, according to an embodiment of the present disclosure.

A processor of the AR signage display apparatus 700 according to the present disclosure may determine the occurrence of the condition for restricting the display of the AR digital signage on the basis of the traveling information of the vehicle and the map information that are received while the vehicle travels.

According to an embodiment, the processor of the AR signage display apparatus 700 may determine at least one of the following techniques: correcting the location at which the condition for restricting the display occurs, or correcting the AR signage data matched with the location, in a manner that varies depending on a change in an image distortion rate of the display region recognized through the vision sensor (for example, the camera in the vehicle) or on a change in an area ratio between the front and lateral surfaces of the display region.

Examples of the display region, as described above, include all regions of each of the following: a building having a plurality of stories, the vicinity of the building, a guide rail near a traveling road, the surface of the traveling road, or other facilities. AR digital signage pieces may be displayed in these regions, respectively. However, for convenience of description, the display region is assumed to be a region of a building with a plurality of stories, but is not limited thereto.

For example, in FIG. 10, in a case where the condition for restricting the display of the AR digital signage occurs, in order to compute width values of front and lateral surfaces of a building that change while the vehicle travels, the processor of the AR signage display apparatus 700 may compute the width values on the basis of changes in the shapes of images of the front and lateral surfaces of the building, which are acquired through the vision sensor in the vehicle.

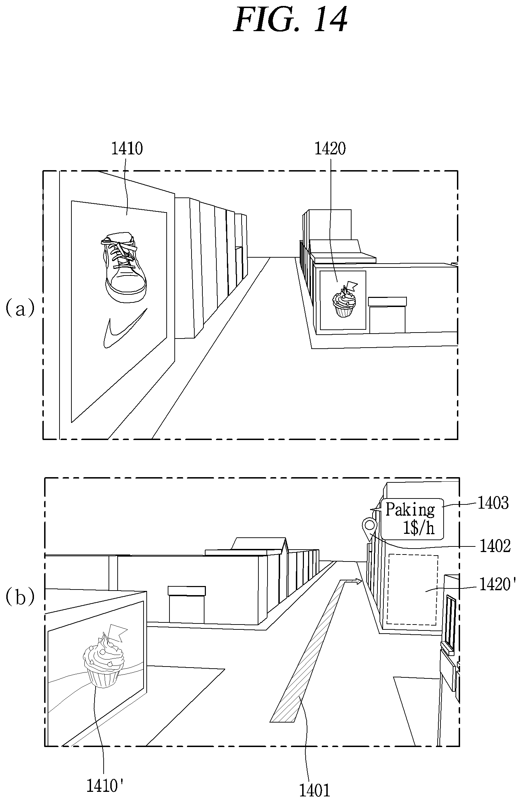

As illustrated in (a) of FIG. 10, first (at a first point in time), a plurality of AR digital signage pieces, for example, AR digital signage pieces 1011, 1012, and 1013 are displayed in a manner mapped onto the lateral surface, as the display regions, of a building within the traveling image. As described above with reference to FIG. 14, the reason for this is that the lateral surface with a lower image distortion ratio is determined as the display region on the basis of the current location of the vehicle and the traveling direction 1501 at the first point in time because the difference between the width values A and B of the front and lateral surfaces of the building is at or below a preset threshold value.

Subsequently, after the vehicle travels further, at a point in time where the vehicle approaches the region of the building (a second point in time after the first point in time), as described in (b) of FIG. 10, the display region is changed to the front surface of the building within the traveling image, and a plurality of AR digital signage pieces, for example, AR digital signage pieces 1021, 1022, and 1023 are displayed in a manner mapped onto the front surface. That is, in accordance with the image in the lateral surface display region that varies as the vehicle travels, the plurality of AR digital signage pieces, for example, the display region for the AR digital signage pieces 1011, 1012, and 1013 changes from the lateral surface to the front surface.

The reason for this is that the front surface with a greater width value is determined as the display region on the basis of the current location of the vehicle and the traveling direction 1002 at the second point in time because the difference between the width values A" and B" of the front and lateral surfaces of the building is above the preset threshold value.

In this manner, in a case where the display region changes from the front surface of the building to the lateral surface or from the lateral surface to the front surface, when the display region corresponds to the location at which the condition for restricting the display occurs, one of the following techniques: correcting the location at which the condition for restricting the display occurs, or correcting the AR signage data matched with the location may be determined in a varying manner.

For example, as the vehicle travels, in a case where the surface (the front surface/lateral surface) with a lower distortion ratio is determined as the display region, the set of the AR signage data may be corrected in such a manner that the technique of displaying the AR digital signage is varied, for example, in such a manner that the transparency, the size, or the like is varied.

In addition, for example, as the vehicle travels, in a case where the surface (the front surface/lateral surface) with a greater width value is determined as the display region, the set of the AR signage data may be corrected in such a manner that the AR digital signage is not temporarily displayed for traveling safety.

In an embodiment, the processor of the AR signage display apparatus 700 may control the AR rendering module and the display in such a manner as to correspond to the traveling direction of the vehicle and the traveling speed so that the story level-based AR digital signage is display-restricted at a point in time when one surface of the building within the traveling image changes gradually to the other surface or immediately after one surface changes to the other surface.

For example, with reference to FIG. 10, in a case where the display region is set to change from the lateral surface to the front surface, the display may be restricted either when, as illustrated in (a) of FIG. 10, the plurality of AR digital signage pieces, for example, the AR digital signage pieces 1011, 1012, and 1013 displayed on a per-story basis on the lateral surface of the building move gradually toward the front surface in a manner that corresponds to the vehicle's traveling, or immediately after, as illustrated in (b) of FIG. 10, they move seamlessly to the front surface of the building.

In this manner, the display restriction of the AR digital signage displayed in the display region is performed seamlessly, thereby contributing to traveling safety and enabling a more natural AR expression.

The traveling image, including the display region with which the rendering-updated AR digital signage overlaps, is displayed on the display 730 of the AR signage display apparatus 700.

In addition, the display of the AR digital signage may be restored to its original state on the basis of the termination of the condition for restricting the display, thereby the AR digital signage being displayed on the display 730 of the AR signage display apparatus 700.

At this point, the restoration of the display of the AR digital signage to its original state refers to the AR merging in real time based on the signage data 901 on the cloud side and the vehicle traveling information 902 on the cloud side and the vehicle side, rather than returning to the display as it was before restricting the display.

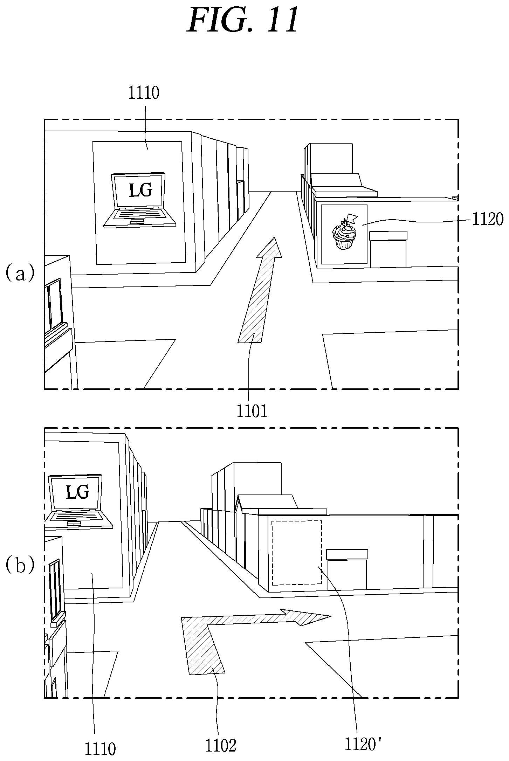

FIGS. 11, 12, 13, 14, 15, and 16A to 16D are views illustrating various embodiments according to the present disclosure, respectively, in which the AR digital signage is changed or is display-restricted on the basis of traveling state information of the vehicle.

FIG. 11 is a view illustrating an embodiment in which the AR signage data (or the set of the AR signage data) is corrected based on turning-related traveling information of the vehicle.

The processor of the AR signage display apparatus 700 according to the present disclosure may receive the turning-related traveling information of the vehicle and recognize the display region located in the turning direction as the location at which the condition for restricting the display occurs, on the basis of the received turning-related traveling information, thereby correcting the AR signage data matched with the location at which the condition occurs.

Specifically, the processor of the AR signage display apparatus 700 may determine that an amount of change in the vehicle's heading angle exceeds a preset threshold value, on the basis of the received turning-related traveling information.

At this point, when the amount of change in the vehicle's heading angle exceeds the preset threshold value, this may indicate that the vehicle enters a turning state or an estimated section in the turned state along a guidance path provided by a navigation device.

Subsequently, the processor of the AR signage display apparatus 700 may correct the AR signage data (or the set of the AR signage data) in such a manner that the AR digital signage in the display region located in the turning direction of the vehicle is display-restricted, based on the determination that the amount of change in the vehicle's heading angle exceeds (or is expected to exceed) the preset threshold value.

Specifically, as illustrated in (a) of FIG. 11, while the vehicle travels in a straight-line traveling direction 1101, AR digital signage pieces are AR-rendered in such a manner as to be displayed on the left- and right-side display regions 1110 and 1120, respectively, of the traveling image.

Subsequently, as illustrated in (b) of FIG. 11, when the condition for restricting the display occurs by turning in the right turning-related traveling direction 1102, the AR digital signage present in the turning direction, that is, the AR digital signage in the right-side display region 1120' of the traveling image is updated in an AR-rendered manner by being turned off or increasing a transparency value thereof.

Conversely, although not illustrated, when the condition for restricting the display occurs by turning in the left turning-related traveling direction, the processor of the AR signage display apparatus 700 may correct the AR signage data corresponding to the AR digital signage in the left-side display region.

While the AR digital signage present in the turning direction of the vehicle is display-restricted in this manner, the digital signage in the display region located in the 'opposite direction' to the turning direction of the vehicle continues to be displayed. For example, from (a) and (b) of FIG. 11, it can be seen that while the vehicle is present in the right turning-related traveling direction 1102, the related AR digital signage continues to be displayed in the display region 1110 in the opposite direction.

Subsequently, when the amount of change in the vehicle's heading angle decreases below the preset threshold value, the processor of the AR signage display apparatus 700 may determine that the display restriction is not necessary, and may correct the AR signage data in such a manner as to cancel the restriction of the display of the digital signage in the display region located in the turning direction.

The AR digital signage in the turning direction may be display-restricted in this manner while the vehicle travels for turning, thereby contributing to traveling safety.

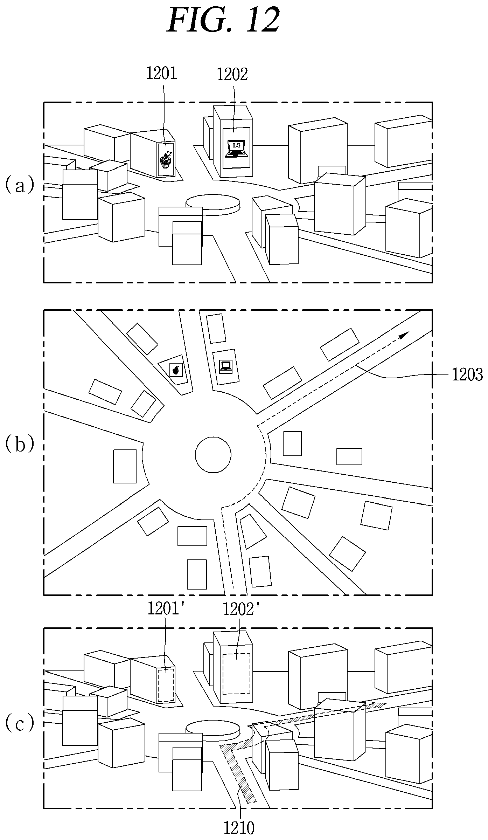

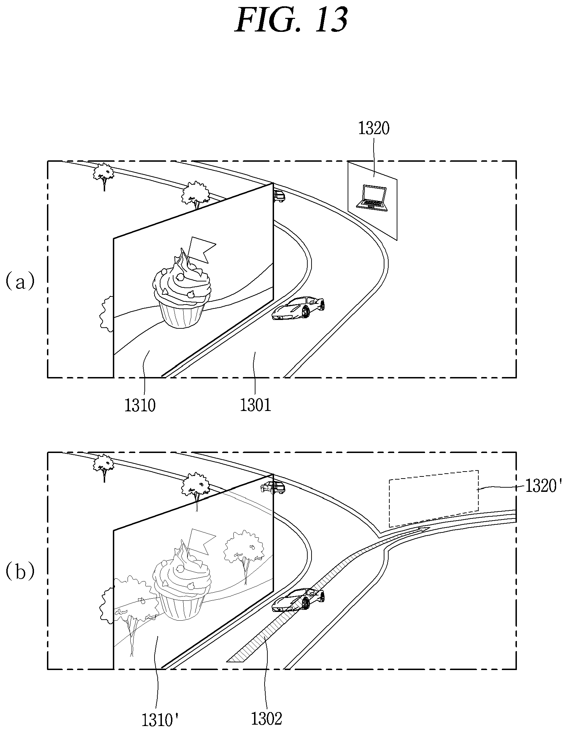

FIGS. 12 and 13 illustrate a method of restricting the display of the AR digital signage in a case where the vehicle enters a specific section.

The processor of the AR signage display apparatus 700 may recognize, on the basis of the current location of the vehicle and the map information, that the vehicle enters a specific section. Furthermore, the processor may restrict the display of digital signage pieces in all display regions in the vicinity while the vehicle is present within the specific section or may correct the AR signage data (or the set of the AR signage data) in the display region located in the traveling direction when the vehicle enters the specific section.

At this point, the specific section refers to a section where the driver is required to keep their eyes forward for the vehicle's traveling safety. For example, the specific section may refer to one of the following: a crossroad turning section, a highway ramp entrance section, a school zone, or a section near a destination along a guidance path provided by the navigation device.

FIG. 12 illustrates the restriction of the display of the AR digital signage in the crossroad turning section.

As illustrated in (a) of FIG. 12, AR digital signage pieces may be displayed in a mapped manner without any restriction on display regions 1201 and 1202, respectively, within the crossroad turning section before the vehicle enters the crossroad turning section. In a case where, as illustrated in (b) of FIG. 12, it is recognized that a vehicle traveling path 1203 extends past the crossroad turning section, once the vehicle enters the crossroad turning section, the AR digital signage pieces in both the display regions 1201 and 1202 within the crossroad turning section, as illustrated in (c) of FIG. 12, may be turned off (1201' and 1202').

Subsequently, in a case where the vehicle completely travels through the crossroad turning section or almost travels through the crossroad turning section (for example, within 2 to 3 m from the exit), the display restriction may be canceled, and thus the AR digital signage pieces may be re-displayed in a mapped manner onto the display regions 1201 and 1202, respectively.

According to an embodiment, in a situation where the vehicle is guided through the path provided by the navigation device, the AR digital signage pieces in the display regions 1201 and 1202 are turned off (1201' and 1202'). However, in a situation where the vehicle is not guided through the path provided by the navigation, the AR digital signage pieces in the display regions 1201 and 1202 may be display-restricted in such a manner as to increase only transparency values thereof. The reason for this is that the AR digital signage is display-restricted on the assumption that it is especially necessary to keep eyes forward in a case where the driver is not familiar with a path.

FIG. 13 illustrates that the AR digital signage is display-restricted in the highway ramp entrance section.

As illustrated in (a) of FIG. 13, while the vehicle travels in a straight line along a highway (1301), both lateral surfaces of the highway, such as guide rails, may be selected as display regions 1310 and 1320, thereby providing AR digital signage pieces in a mapped manner onto the display regions 1310 and 1320, respectively.

As illustrated in (b) of FIG. 13, when the vehicle enters the ramp section on the basis of the current location of the vehicle and the map information and thus it is recognized that the vehicle enters the described-above specific section, the processor of the AR signage display apparatus 700 may correct the AR signage data in such a manner as to restrict the display of the digital signage in a display region 1320' located in the ramp entrance section in a traveling direction 1302 of the vehicle.

According to an embodiment, the display of a display region 1310' in the opposite direction to the traveling direction 1302 of the vehicle may be restricted using a different display technique. For example, as illustrated in (b) of FIG. 13, the AR digital signage in the display region 1320' located in the ramp entrance section may be turned off, and only the transparency value of the transparency of the AR digital signage in the display region 1310' located in the opposite direction in the ramp entrance section is increased, thereby calling attention.

In another embodiment, in a situation where the vehicle is guided through the path provided by the navigation device, AR digital signage in the display region 1320' located in the ramp entrance section is turned off. However, in a situation where the vehicle is not guided through the path provided by the navigation device, the AR digital signage in the display region 1320' located in the ramp entrance section may be realized in such a manner as to increase only the transparency value thereof.

According to the present disclosure, even in a case where the condition for restricting the display occurs in this manner, a transparency correction value for the AR signage data matched with the location at which the condition for restricting the display occurs may be applied in a manner that varies depending on whether or not the vehicle travels while being path-guided.

FIG. 14 illustrates that the display of the AR digital signage is changed or restricted when the vehicle approaches a destination.

The processor of the AR signage display apparatus 700 according to the present disclosure may receive navigation information of the vehicle through a communication module. In response to the vehicle entering a destination section, the processor may determine, on the basis of the received navigation information, that the above-described condition for restricting the display occurs.

In this case, in response to the vehicle entering the destination section, the processor may correct the AR signage data on the basis of the received navigation information in such a manner that, among digital signage pieces in display regions within the relevant section, the display of the digital signage containing content not related to the destination is restricted. The reason for this is to provide a method of removing or changing the distracting AR digital signage in such a manner that the driver drives with focus on the destination ahead.

With reference to FIG. 14, while the vehicle travels at a predetermined distance or greater apart from the destination provided by the navigation device, AR digital signage pieces related to the display regions 1410 and 1420 within the traveling image, as illustrated in (a) of FIG. 14, are displayed in a mapped manner.

Subsequently, in a case where the vehicle approaches within the predetermined distance (for example, 50 to 80 m) from the destination provided by the navigation device, the AR digital signage in the display region 1420 in the direction of the destination is turned off (1420'), and content related to the destination is displayed in a mapped manner. For example, location information 1402 and/or parking information 1403 of the destination may be displayed in the direction of the destination.

The corresponding AR signage data are corrected in such a manner that the AR digital signage with an increased transparency value is displayed in a display region 1410' in the opposite direction to the direction of the destination.

In this manner, the AR digital signage not related to the destination is display-restricted, and the display switches to the form of the AR digital signage containing the content related to the destination, thereby providing information that enables the driver to accurately arrive at the destination.

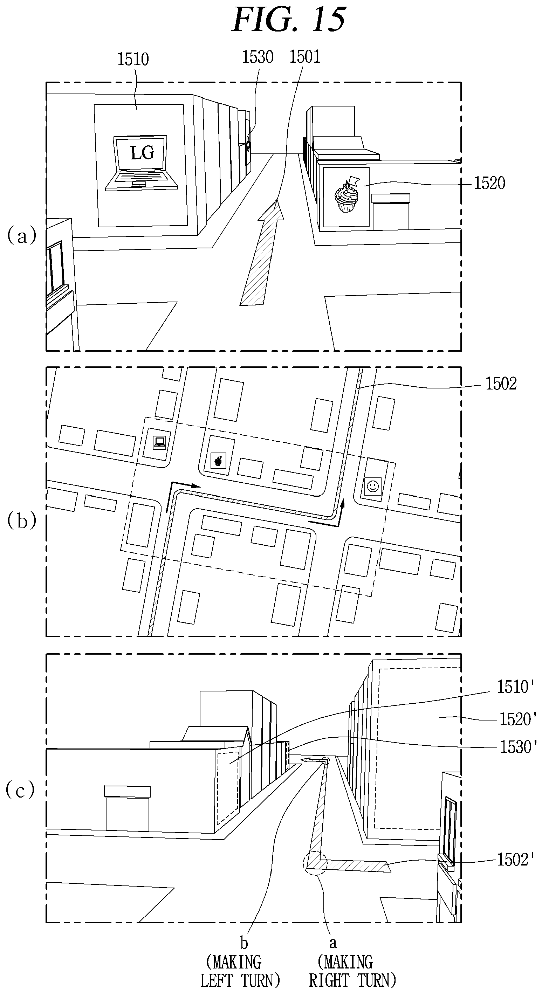

FIG. 15 illustrates that the AR digital signage in a successive guidance section is display-restricted based on the navigation information of the vehicle.

The processor of the AR signage display apparatus 700 may receive the navigation information of the vehicle through the communication module and recognizes, on the basis of the received navigation information, that the vehicle enters a traveling direction change section. Thus, the processor may determine that the condition for restricting the display occurs.

According to an embodiment, when it is recognized that the traveling direction changes a set number of times or more within the traveling direction change section, the processor of the AR signage display apparatus 700 may correct the AR signage data in such a manner that the display of the digital signage in the display region within the relevant section is restricted.

As illustrated in (a) of FIG. 15, in a straight-line traveling section 1501 where the vehicle travels according to the navigation information, AR digital signage pieces may be displayed in a mapped manner without any restriction in display regions 1510, 1520, and 1530, respectively, within the traveling image.

Thereafter, when a change in the traveling direction, as illustrated in (b) of FIG. 15, occurs a set number of times or more within a predetermined distance (within 200 m) on a guidance path 1502, the AR digital signage pieces in the display regions 1510, 1520, and 1530 within the predetermined distance (200 m), as illustrated in (c) of FIG. 15, may be turned off. This occurs while the vehicle travels along the guidance path 1502 (for example, making a right turn (a) and then a left turn (b)) in a section within the predetermined distance (200 m) (1510', 1520', and 1530').

The reason for this is to prevent the providing of the AR digital signage for interfering with the path guidance when the traveling direction is frequently changed.

The correction of the AR signage data may be correction of one of the following: the location, transparency, size, or shape of the corresponding digital signage. In addition, the technique of correcting the AR signage data may vary depending on a type of the condition for restricting the display. When the condition for restricting the display is canceled, the AR digital signage may be restored to its original state and displayed.

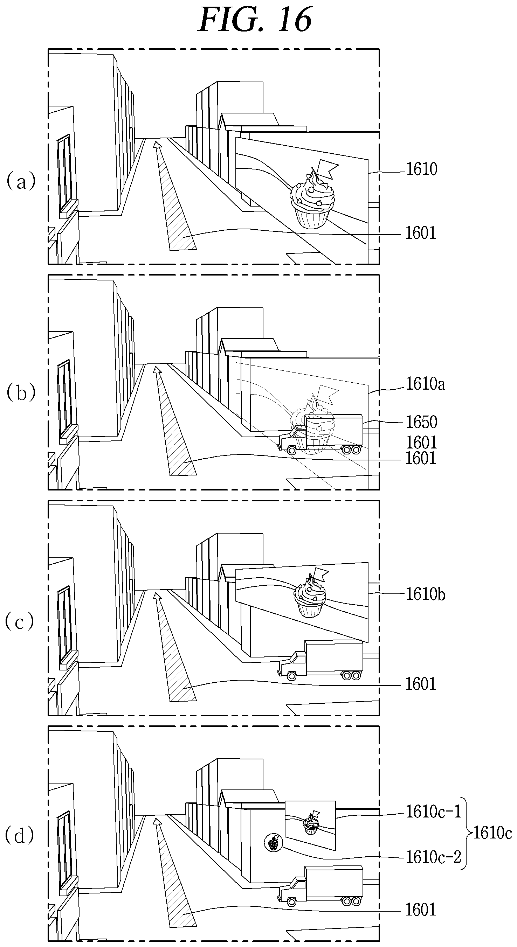

FIG. 16 illustrates that the AR digital signage in a road junction section is display-restricted.

The processor of the AR signage display apparatus 700 may recognize the junction section for the lane along which the vehicle travels, on the basis of the current location of the vehicle and the map information, which are received through the communication module.

At this point, the junction section may include a point where lanes merge, allowing another vehicle to enter the current traveling lane from the right-side or left-side of the current traveling lane, or a section within a predetermined distance from that point.

Subsequently, based on another vehicle approaching the recognized junction section, the processor may correct the AR signage data in such a manner as to change one of the following: the location, transparency, size, or shape of the digital signage in the display region at a relevant location.

With reference to (a) of FIG. 16, although the junction section is recognized while the vehicle travels in a straight line (1601), the AR digital signage may be displayed in a mapped manner in a display region 1610 while no vehicle/object is detected. At this point, the vehicle may also detect the presence of an object in the vicinity of the vehicle through the ADAS sensor or the like, particularly, the presence of an object approaching the junction section.

When a vehicle 1650 approaching the junction section is detected, the transparency value of the AR digital signage, as illustrated in (b) of FIG. 16, is increased, thereby mapping the resulting AR digital signage onto a display region 1610a. Alternatively, the location of the AR digital signage, as illustrated in (c) of FIG. 16, is changed (for example, the location thereof is moved over an object 1650), thereby mapping the resulting AR digital signage onto a display region 1610b, resulting from the change. Alternatively, the form of the AR digital signage, as illustrated in (c) of FIG. 16, is converted (1610c_1 and 1610c_2), thereby mapping the resulting AR digital signage onto a display region 1610c. Consequently, the driver can keep their eyes on the vehicle 1650 approaching the junction section. Accordingly, this contributes to the traveling safety of the driver.

FIGS, 17A to 17D, 18, 19A to 19D, 20, 21, 22, 23, and 24 are views illustrating various embodiments according to the present disclosure, respectively, in which the AR digital signage is changed or display-restricted on the basis of the traveling environmental information of the vehicle.

The processor of the AR signage display apparatus 700 of the vehicle according to the embodiment of the present disclosure may recognize the occurrence of the situation requiring the driver to keep their eyes forward based on the traveling environmental information of the vehicle and the sensing data of the vehicle, which are collected while the vehicle travels.

In this case, the processor may perform a rendering update by correcting the AR signage data matched with a region related to the traveling environmental information in such a manner that this region is not hidden from view.

At this point, the situation requiring the driver to keep their eyes forward may be one of the following under the surrounding environment of the vehicle: detection of objects overlapping within the traveling image or of an object approaching within the traveling image, detection of an increase in a traveling speed of the vehicle or of the traveling speed reaching or exceeding a reference speed, detection of a traffic congestion situation in the vicinity of the vehicle, detection of a pedestrian protection region, entering of a speed limit region by the vehicle, or occurrence of a decrease in visible distance based on road information or weather information.

In addition, according to an embodiment, the traveling environmental information may include one or more of the following: road information, road situation information, weather information, or school zone information.

In addition, according to an embodiment, sensing data of the vehicle may include one or more of the following: the vehicle's ADAS sensing data, speed data, destination data, or V2X detection data.

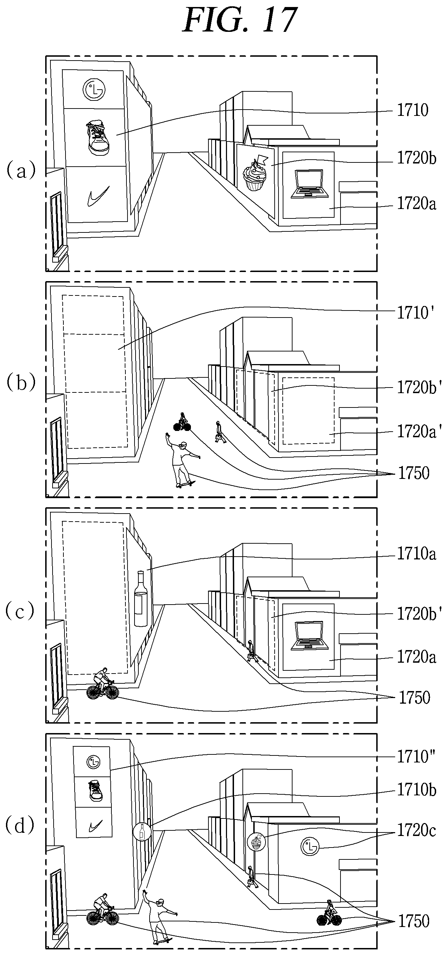

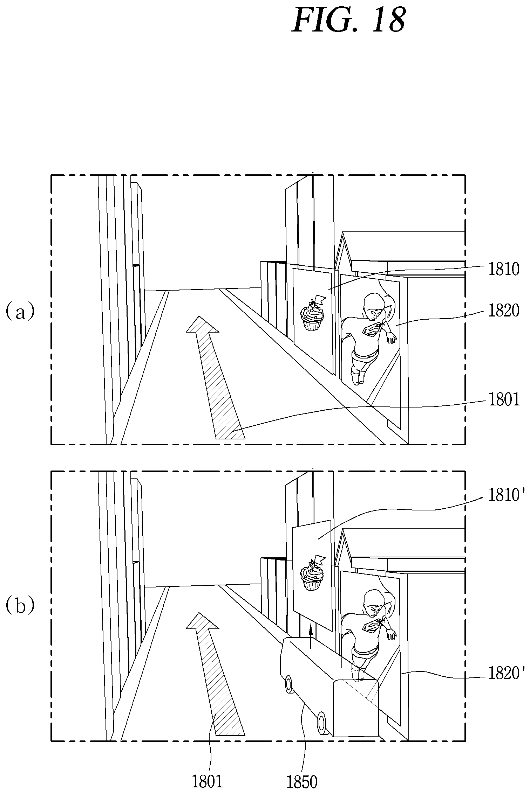

FIGS. 17 and 18 illustrate that the AR digital signage is display-restricted in a case where an object moving in the vicinity of the vehicle is detected in the situation requiring the driver to keep their eyes forward.

The processor of the AR signage display apparatus 700 of the vehicle according to the embodiment of the present disclosure may determine the technique of correcting the AR signage data matched with a region related to the traveling environmental information of the vehicle in a manner that varies depending on the traveling speed of the vehicle, based on the detection of objects overlapping within the traveling image of the vehicle or an object approaching within the traveling image.

Specifically, in a case where, when the object is detected, the traveling speed of the vehicle exceeds a reference value (for example, 40 km/h), the processor may turn off the AR digital signage in the region related to the traveling environmental information of the vehicle, that is, in a display region in the vicinity a region where the object is detected, in order to ensure that the driver intensively keeps their eyes forward attentively.

In addition, in a case where, when the object is objected, it is detected that the traveling speed of the vehicle is below the reference value, the processor may determine that the driver can keep their eyes to forward in a more relaxed manner. Thus, the processor may correct the corresponding AR signage data in such a manner as to increase only the transparency of the AR digital signage, matched with the region related to the traveling environmental information of the vehicle. At this point, when the traveling speed is below the reference value, this may also refer to the state where the vehicle comes to a stop.

For example, as illustrated in (a) of FIG. 17, in a state where, story level-based AR digital signage pieces are displayed in the front region 1710 and the lateral regions 1720a and 1720b, respectively, of a building, which are regions ahead of the vehicle, an object 1750, such as a pedestrian, may be detected in the vicinity. In this case, as illustrated (b) of FIG. 17, story level-based AR digital signage pieces in display regions 1710', 1720a', and 1720b', respectively, may all be turned off. Alternatively, as illustrated (c) of FIG. 17, in order to avoid only the display region matched with the detected object, the display region may be changed to a display region 1710a, resulting from changing the location, or only the AR digital signage in the display region 1720b' may be turned off. In addition, as illustrated in (d) of FIG. 17, the existing AR digital signage pieces may be converted into more simplified AR objects 1710", 1710b, 1720c, for example, into the form of AR icons and displayed in a mapped manner.

As illustrated in (a) of FIG. 18, an object 1850, for example, another vehicle, which moves in the same direction as a traveling direction 1801 of the vehicle, may be detected based on the ADAS sensing data or the like. In this case, the location of one of the AR digital signage pieces mapped onto display regions 1810 and 1820, respectively, in the direction in which the object is located, may be moved (1810'). Furthermore, the matched AR signage data may be corrected in such a manner as to increase a transparency value of a portion, overlapping with the object 1850, of the AR digital signage.

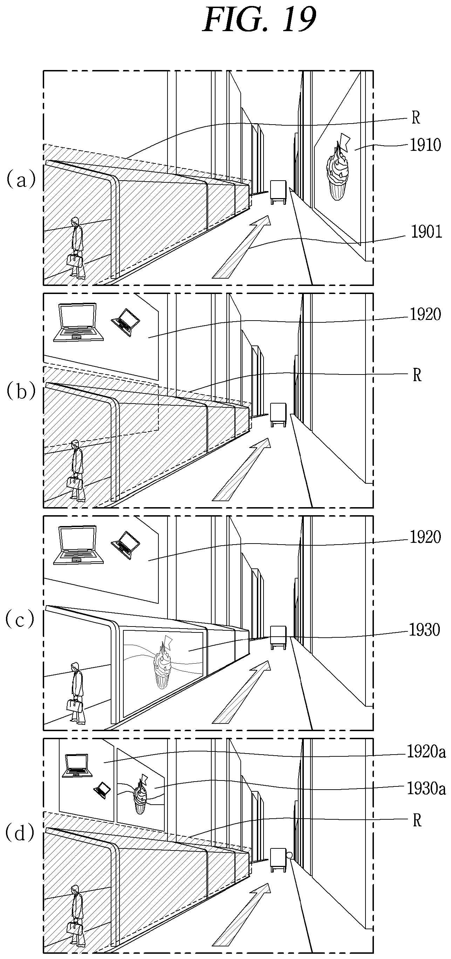

FIG. 19 illustrates that the AR digital signage is display-restricted in a case where a fixed object in the vicinity of the vehicle is detected in the situation requiring the driver to keep their eyes forward.

Based on the recognition of a region including a fixed structure due to the occurrence of the situation requiring the driver to keep their eyes forward from the vehicle, the processor of the AR signage display apparatus 700 of the vehicle according to the present disclosure may correct the matched AR signage data in such a manner the AR digital signage is displayed in a manner that avoids the region including the relevant fixed structure.

According to an embodiment, in a case where the display region includes story-level information, based on story-level information of the relevant display region, the processor may perform a rendering update in such a manner as to vary at least one of the following: the transparency, location, size, or shape of the AR digital signage for the display region corresponding to the relevant story level.

For example, as illustrated in (a) of FIG. 19, the display of the AR digital signage, matched with the story level of a display region overlapping with a pedestrian protection region or a fixed object region R, such as a bus stop, in the left-side direction of a traveling direction 1901 of the vehicle, may be restricted. At this point, the related AR digital signage may remain displayed in a display region 1910 located in the opposite direction to the fixed object region R.

The display in the display region in the vicinity of the fixed object region R may be restricted in various ways as follows.

Specifically, as illustrated in (b) of FIG. 19, the AR digital signage matched with the relevant story level may not be displayed. Alternatively, as illustrated (c) of FIG. 19, the AR digital signage matched with the relevant story level may be displayed by adjusting the transparency value thereof (increasing the transparency) (1930). Alternatively, as illustrated in (d) of FIG. 19, in a display region corresponding to another story level, for example, a story level immediately above (or a story level immediately below), the AR digital signage matched with the relevant story level, and the AR digital signage in the display region corresponding to the relevant story level, may be displayed, as reduced-size two AR digital signage pieces 1920a and 1930, respectively, in a mapped manner.

In addition, although not illustrated, a portion of the AR digital signage matched with the relevant story level may be cropped, and the remaining portions thereof may be displayed in a mapped manner.

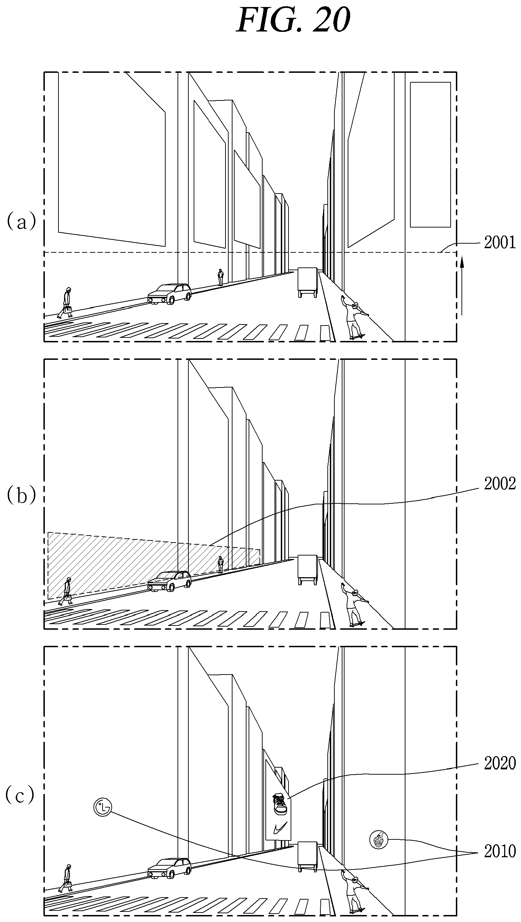

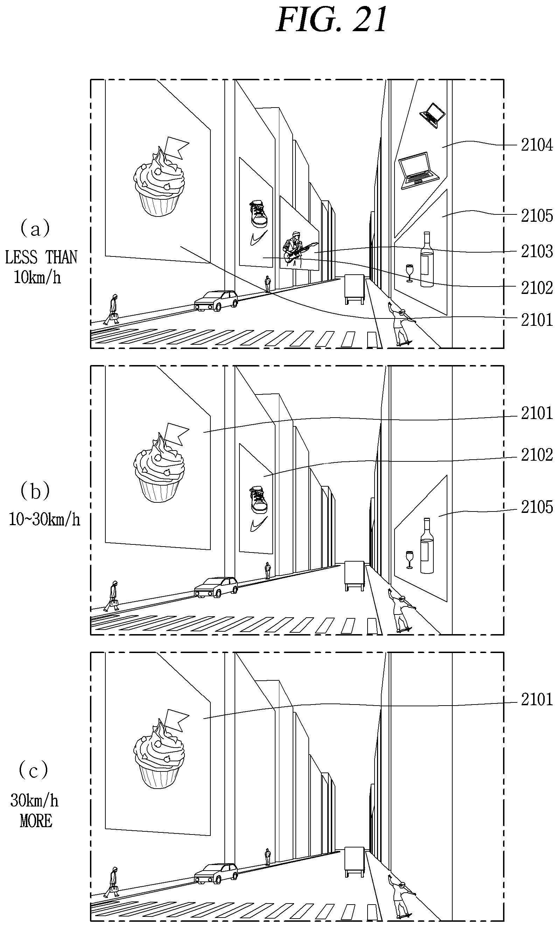

FIGS. 20 and 21 illustrate that the AR digital signage is display-restricted within a traffic congestion section in the situation requiring the driver to keep their eyes forward.

Based on the recognition of the situation (for example, the traffic congestion section) requiring the driver to keep their eyes forward, the processor of the AR signage display apparatus 700 of the vehicle according to the present disclosure may correct the corresponding AR signage data in such a manner as to change the overall reference location of the display region included within the traveling image, in order to ensure that the driver keeps their eyes forward attentively.

At this point, the traffic congestion section may also refer to a case where transportation means (for example, 20 or more transportation means), including many vehicles, or persons (for example, 20 or more persons) are recognized based on the ADAS sensing data of the vehicle or where a traffic congestion situation is recognized on the basis of traffic information included in dynamic information on the cloud side.

For example, as illustrated in (a) of FIG. 20, in the traffic congestion section, a reference line 2001 for a display region onto which the AR digital signage is to be mapped may be adjusted across the board upward (or downward), and the AR digital signage may be mapped accordingly. Accordingly, the driver can gaze at a congestion situation below (or above) the reference line 2001.

In addition, as illustrated in (b) of FIG. 20, the corresponding AR signage data may be corrected in such a manner that the AR digital signage, having a more increased transparency value, is displayed in a display region 2002 within a portion overlapping with the traffic congestion section.

In addition, based on the recognition of the situation requiring the drive to keep their eyes forward, such as the traffic congestion section, the processor of the AR signage display apparatus 700 of the vehicle according to the embodiment of the present disclosure may correct the corresponding AR signage data (or the set of the AR signage data) in such a manner that the degree to which the AR digital signage is display-restricted varies depending on the degree to which the display region within the traveling image is close to the current location of the vehicle .

Specifically, the processor may perform a rendering update in such a manner that the closer the display region within the traveling image is to the current location of the vehicle, the greater the degree to which the AR digital signage is display-restricted. In addition, the processor may correct the matched AR signage data in such a manner that the greater the degree to which the AR digital signage is display-restricted, the smaller the size value of the digital signage or the greater the transparency value of the digital signage.

For example, as illustrated in (c) of FIG. 20, the matched AR signage data may be corrected in such a manner that, in a display region 2010 at a location close to the current location of the vehicle in the traveling image, the varied AR digital signage, for example, has an increased transparency value or is converted into the form of a simple object (for example, in the form of an icon) to ensure that the driver keeps their eyes forward. In contrast, in the traveling image, the existing AR digital signage may be displayed, as it is, in a display region 2020 located far from the current location of the vehicle.

According to an embodiment, the processor may correct the matched AE signage data in such a manner that the display region included in the traveling image or the maximum of digital signage pieces displayed in the display region varies depending on the traveling speed of the vehicle.

Specifically, the processor may correct the AR signage data in such a manner that the display region or the maximum of digital signage pieces displayed in the display region decreases in proportion to the traveling speed of the vehicle.

For example, as illustrated in (a) of FIG. 21, in a case where the traveling speed of the vehicle is less than 10 km/h or the vehicle comes to a stop, AR digital signage pieces may be displayed in a maximum of five display regions 2101, 2102, 2103, 2104, and 2105, respectively, in the traveling image. As illustrated in (b) of FIG. 21, when the traveling speed of the vehicle ranges from 10 to 30 km/h, a maximum of three display regions may be displayed at a time. As illustrated in (c) of FIG. 21, when the traveling speed is 30 km/h or more, the AR digital signage is displayed only in at most one display region, or AR digital signage pieces in all display regions may be turned off.

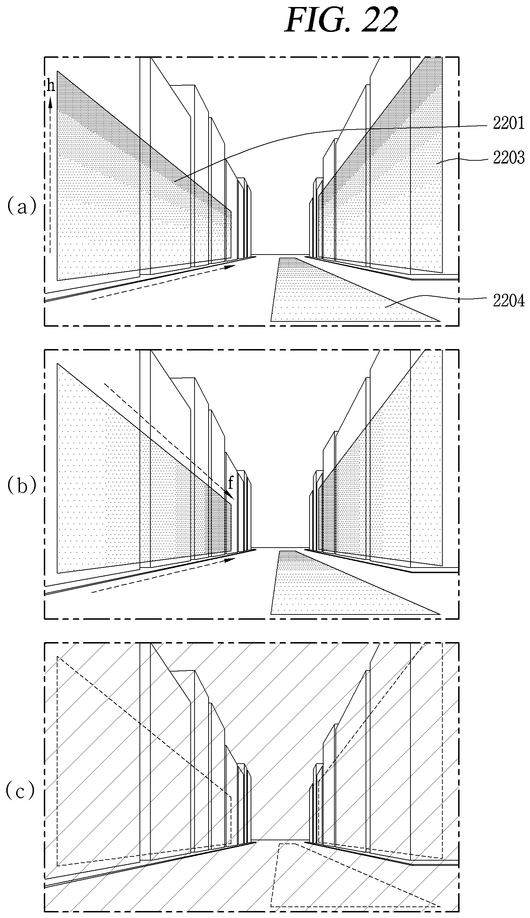

FIG. 22 illustrates that the AR digital signage is display-restricted when the driver's visible distance is reduced in the situation requiring the driver to keep their eyes forward.

Based on the occurrence of the situation where the visible distance is reduced on the basis of the road information of the vehicle or the weather information, the processor of the AR signage display apparatus 700 of the vehicle according to the present disclosure may determine whether or not the display-restricted region of the digital signage is expanded, in a manner that varies depending on the result of detecting the number of objects recognizable within the traveling image.

At this point, the road information may be collected through the dynamic information on the cloud side or the navigation information on the vehicle side and include, for example, types of roads, the number of lanes, data about the width of each lane, real-time traffic information (for example, traffic information on a per-road/vehicle basis), accident information, and the like.

In addition, the weather information may be received as one piece of dynamic information on the cloud side and, for example, may include information on whether or not visibility decreases due to the amount of rainfall, mist, fine dust, and the like, and a numerical value representing visibility.

According to an embodiment, when there are many recognizable objects (for example, when a reference value is reached or exceeded (for example, when 80% or more of the objects are recognizable)), the processor may perform a rendering update in such a manner that a transparency value of a display region close to the vehicle is increased and that the AR digital signage in a remote region is displayed, as was before.

In contrast, according to an embodiment, in a situation where the visible distance is reduced, when the number of recognizable objects within the traveling image is smaller than a reference value (for example, less than 80 or 70%), a rendering update may be performed in such a manner that the digital signage within the traveling image is not displayed to ensure that the drive keep their eyes forward.

As illustrated in (a) of FIG. 22, in a situation where a visible distance is reduced due to the traffic congestion section, the matched AR signage data may be corrected in such a manner that a transparency value of a low story-level portion 2203 of a building display region is increased and that a brightness value of a high story-level portion 2201 of the building display region is increased (that is, in such a manner as to create a gradation effect). In addition, a rendering update may be performed in such a manner that the transparency of a lane-surface display region 2204 close to the vehicle on the traveling lane is increased and that the more remote the distance, the higher the transparency and the greater the brightness value.

As illustrated in (b) of FIG. 22, in a situation where the visible distance is reduced due to the weather situation, the AR signage data may be corrected in such a manner that the greater the distance from the current location of the vehicle, the lower the transparency of the AR digital signage and the higher the brightness in order to minimize driving disturbances caused by reduced visibility ahead of the vehicle, and the AR digital signage may be mapped.

In contrast, as illustrated in (c) of FIG. 22, in a case where the visible distance is reduced to less than a threshold value, AR digital signage pieces in all display regions included in an image ahead of the vehicle are turned off.

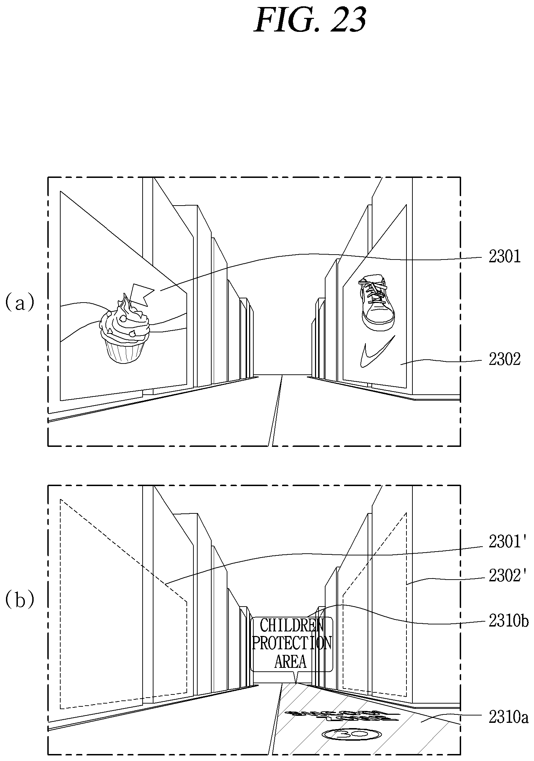

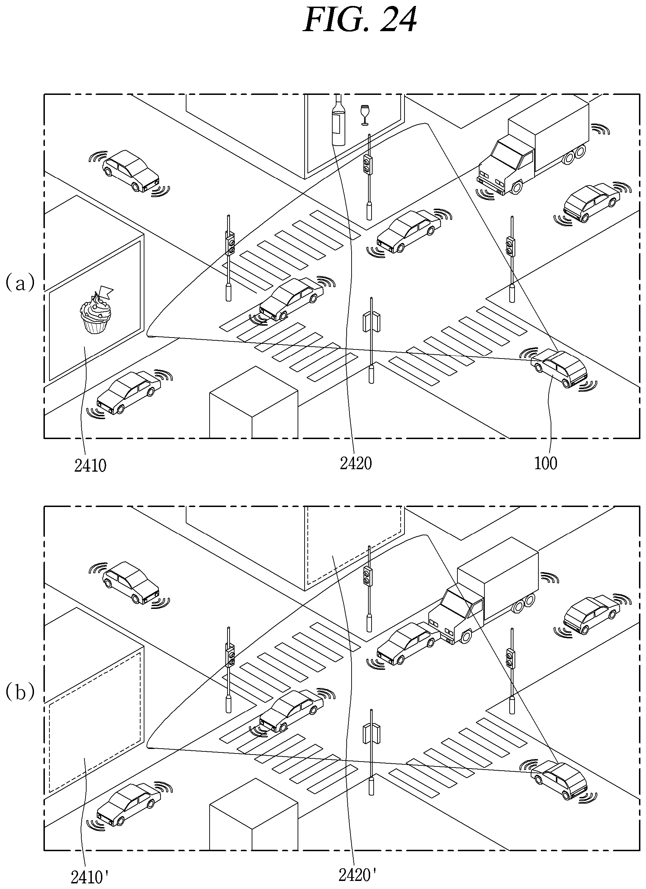

FIGS. 23 and 24 illustrate that, in the situation requiring the driver to keep their eyes forward, the AR digital signage is display-restricted when the vehicle enters the speed limit region or when a risk is detected.

Based on the traveling environmental information of the vehicle, the processor of the AR signage display apparatus 700 of the vehicle according to the present disclosure may not display the digital signage displayed in the display region within the traveling image while the vehicle is located within the speed limit region.

For example, AR digital signage pieces displayed in regions 2301 and 2302 within the traveling image are not display-restricted, as illustrated in (a) of FIG. 23, before the vehicle enters the speed limit region, such as a school zone. The AR digital signage pieces in the display regions may be turned off, as illustrated in (b) of FIG. 23 (2301' and 2302').

At this point, an AR object 2310a indicating a speed limit value may be displayed on the surface of the traveling road in the speed limit region. Furthermore, instead of the display-restricted AR digital signage, an AR icon (for example, a 'children protection area') 2310b indicating the speed limit region may be displayed in a floating form within the traveling image.

The processor of the AR signage display apparatus 700 of the vehicle according to the present disclosure may not display the digital signage displayed in the display region within the traveling image in a case where a dangerous situation is detected based on the sensing data of the vehicle.

For example, as illustrated in (a) of FIG. 24, while AR digital signage pieces are displayed in display regions 2410 and 2420, respectively, in a case where a dangerous situation is detected on the basis of the ADAS sensing data or V2X data of the vehicle 100, the AR digital signage pieces in the display regions may switch to turned-off states 2410' and 2420', respectively, as illustrate in (b) of FIG. 24.

As described above, according to one or several embodiments of the present disclosure, in a case where the vehicle travels for turning, changes its course frequently, or enters a specific area, such as a roundabout, one or several AR digital signage pieces are disabled from being displayed or can be display-restricted in order to ensure that the driver drives attentively on the basis of traveling information about the specific area. In addition, on the basis of the traveling environmental information, such as information about the traffic congestion section or information about a decrease in the vehicle's visible distance, the display of the AR digital signage can be restricted in such a manner that the driver's view ahead of the vehicle is not hidden from view and that a region related to the travel environmental information is not hidden from view. In addition, the appropriate method of restricting the display, which varies depending on the attributes of the traveling information of the vehicle and/or the environmental information, is applied on a per-situation basis. Consequently, the AR digital signage with high realism can be provided, thereby enhancing traveling safety.

The present disclosure can be embodied as computer-readable codes (applications or software modules) on a program-recorded medium. The method of controlling an autonomous vehicle can be implemented with codes stored in memory or similar storage.

Examples of the computer-readable media include all types of recording devices capable of storing data readable by a computer system. Furthermore, examples of the computer-readable medium include a hard disk drive (HDD), a solid-state disk (SSD), a silicon disk drive (SDD), a ROM, a RAM, a CD-ROM, a magnetic tape, a floppy disk, an optical data storage device, and the like. The computer-readable medium may also be realized in the form of a carrier wave (such as for transmission over the Internet). In addition, the computer may also include a process or a control unit. Therefore, the description detailed above should be regarded exemplary without being interpreted in a limited manner in all aspects. The scope of the present disclosure should be determined by the proper construction of the following claims. All equivalent modifications to the embodiments of the present disclosure fall within the scope of the present disclosure.

## Claims

1. An AR signage display apparatus operating in conjunction with a vehicle, the apparatus comprising:
a communication module that communicates with the vehicle and a cloud server providing an AR signage platform service;
a display on which a traveling image of the vehicle, acquired through a vision sensor, is displayed; and
a processor that receives sensing data of the vehicle through the communication module, makes a request to the cloud server for AR signage data for displaying, as digital signage, content for neighboring a POI determined on the basis of a location of the vehicle and the sensing data of the vehicle, and renders the digital signage, generated on the basis of the AR signage data corresponding to the request, onto a display region within the traveling image,
wherein the processor determines the occurrence of a condition for restricting the display of the digital signage, on the basis of traveling information of the vehicle and map information, which are received while the vehicle travels, corrects the AR signage data matched with a location at which the condition for restricting the display occurs, and performs a rendering update of the digital signage on the basis of the corrected AR signage data.

2. The AR signage display apparatus of claim 1, wherein the processor receives turning-related traveling information of the vehicle, recognizes, on the basis of the received turning-related traveling information, a display region located in a turning direction as the location at which the condition for restricting the display occurs, and corrects the AR signage data matched with the display region.

3. The AR signage display apparatus of claim 2, wherein the processor determines, on the basis of the received turning-related traveling information, that an amount of change in a heading angle of the vehicle exceeds a preset threshold value, and, on the basis of the determination, corrects the AR signage data in such a manner as to display-restrict digital signage in the display region located in the turning direction.

4. The AR signage display apparatus of claim 3, wherein the processor maintains the display of digital signage in a display region located in the opposite direction to the turning direction while the amount of change in the heading angle of the vehicle exceeds the preset threshold value, and, in response to the amount of change in the heading angle of the vehicle decreasing to below the preset threshold value, corrects the AR signage data in such a manner as to cancel the restriction of the display of the digital signage in the display region located in the turning direction.

5. The AR signage display apparatus of claim 1, wherein the processor recognizes, on the basis of the current location of the vehicle and the map information, that the vehicle enters a specific section, and corrects the AR signage data in such a manner as to restrict the display of digital signage pieces in all neighboring display regions while the vehicle is present in the specific section.

6. The AR signage display apparatus of claim 1, wherein the processor recognizes, on the basis of the current location of the vehicle and the map information, that the vehicle enters a specific section, and corrects the AR signage data in such a manner as to restrict the display of digital signage in a display region located in a traveling direction of the vehicle when the vehicle enters the specific section.

7. The AR signage display apparatus of claim 1, wherein the processor applies a transparency correction value to the AR signage data matched with the location at which the condition for restricting the display occurs, in a manner that varies depending on whether or not the vehicle travels while being path-guided,.

8. The AR signage display apparatus of claim 1, wherein the processor receives navigation information of the vehicle through the communication module and, in response to the vehicle entering a traveling direction change section or a destination section, determines, on the basis of the received navigation information, that the condition for restricting the display occurs.

9. The AR signage display apparatus of claim 8, wherein in response to the vehicle entering the destination section, the processor corrects the AR signage data on the basis of the received navigation information in such a manner as to restrict the display of digital signage containing content not related to a destination, among digital signage pieces in display regions within the destination section.

10. The AR signage display apparatus of claim 8, wherein in response to the vehicle entering the traveling direction change section, based on the recognition that a traveling direction changes a set number of times or more within the traveling direction change section, the processor corrects the AR signage data on the basis of the received navigation information in such a manner as to restrict the display of digital signage in a display region within the traveling direction change section.

11. The AR signage display apparatus of claim 1, wherein the correction of the AR signage data is correction of one of the following: the location, transparency, size, or shape of the corresponding digital signage.

12. The AR signage display apparatus of claim 11, wherein the processor recognizes a junction section for a lane along which the vehicle travels, on the basis of the current location of the vehicle and the map information, and, based on another vehicle approaching the junction section, the processor may correct the AR signage data on the basis of the sensing data of the vehicle in such a manner as to change one of the following: the location, transparency, size, or shape of digital signage in a display region at a relevant location.

13. The AR signage display apparatus of claim 1, wherein the processor determines at least one of the following techniques: correcting the location at which the condition for restricting the display occurs, and/or correcting AR signage data matched with the location, in a manner that varies depending on a change in an image distortion rate of the display region recognized through the vision sensor or a change in an area ratio between the front and lateral surfaces of the display region.

14. The AR signage display apparatus of claim 1, wherein the traveling image including the display region in which the rendering-updated digital signage overlaps is displayed on the display, and the display of the AR digital signage is restored based on the termination of the condition for restricting the display, thereby the AR digital signage being displayed on the display.
